(19) Europäisches Patentamt
European Patent Office
Office européen des brevets

(11) **EP 4 295 533 B1**

(12) **EUROPÄISCHE PATENTSCHRIFT**

(45) Veröffentlichungstag und Bekanntmachung des Hinweises auf die Patenterteilung:
**11.06.2025 Patentblatt 2025/24**

(21) Anmeldenummer: **22707081.0**

(22) Anmeldetag: **17.02.2022**

(51) Internationale Patentklassifikation (IPC):
*G06Q 20/36* (2012.01)      *G06Q 20/38* (2012.01)
*H04W 12/06* (2021.01)      *H04W 12/08* (2021.01)
*H04L 9/40* (2022.01)       *G06Q 20/40* (2012.01)
*H04L 9/32* (2006.01)       *H04W 12/02* (2009.01)

(52) Gemeinsame Patentklassifikation (CPC):
**H04L 63/0815; G06Q 20/363; G06Q 20/388; G06Q 20/4014; H04L 9/3265; H04L 9/3268; H04L 63/0823; H04L 63/102; H04W 12/02; H04W 12/06; H04W 12/08**

(86) Internationale Anmeldenummer:
**PCT/EP2022/053978**

(87) Internationale Veröffentlichungsnummer:
**WO 2022/175396 (25.08.2022 Gazette 2022/34)**

(54) **AUTHENTISIERUNG UNTER VERWENDUNG EINER MEHRZAHL VON ELEKTRONISCHEN IDENTITÄTEN**

AUTHENTICATION BY MEANS OF A PLURALITY OF ELECTRONIC IDENTITIES

AUTHENTIFICATION AU MOYEN D'UNE PLURALITÉ D'IDENTITÉS ÉLECTRONIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.02.2021 DE 102021103994**

(43) Veröffentlichungstag der Anmeldung:
**27.12.2023 Patentblatt 2023/52**

(73) Patentinhaber:
• **Bundesdruckerei GmbH**
  **10969 Berlin (DE)**
• **Freie Universität Berlin**
  **14195 Berlin (DE)**

(72) Erfinder:
• **DIETRICH, Frank**
  **12437 Berlin (DE)**
• **MARGRAF, Marian**
  **14542 Werder (DE)**
• **OHLENDORF, Tim**
  **12163 Berlin (DE)**
• **SCHWAN, Matthias**
  **13086 Berlin (DE)**

(74) Vertreter: **Richardt Patentanwälte PartG mbB**
**Wilhelmstraße 7**
**65185 Wiesbaden (DE)**

(56) Entgegenhaltungen:
**WO-A2-2006/070189      CN-A- 109 063 523
DE-A1- 102019 100 335**

**Beschreibung**

Die Erfindung betrifft ein Verfahren zum Freigeben von ein oder mehrere Identitätsattribute ein oder mehrerer auf einem mobilen Endgerät gespeicherten elektronischen Identitäten für ein auslesendes Computersystem. Ferner betrifft die Erfindung ein entsprechende mobiles Endgerät.

Mobile Endgeräte, wie beispielsweise Smartphones, sind allgegenwärtig. Sie werden in vielen Lebensbereichen und Situationen zur Erfüllung verschiedenster Aufgaben im digitalen Bereich. Dabei kommen mobile Endgeräte auch als Identitätsnachweis, Authentisierungs- und Autorisierungstoken, etwa in elektronischen Geschäftsprozessen, zum Einsatz. Hierbei gibt es meist für jeden Anwendungskontext bzw. für jede elektronische Identität eigenständige Verfahren zum Freigeben von Identitätsattributen, wodurch eine Nutzung schnell kompliziert und aufwendig wird.

Die DE 10 2019 100335 A1 beschreibt ein Verfahren zum sicheren Bereitstellen eines personalisierten elektronischen Identität auf einem Endgerät, die von einem Nutzer zum Identifizieren bei Inanspruchnahme einer Online-Dienstleistung nutzbar ist, wobei bei dem Verfahren in einem System mit Datenverarbeitungseinrichtungen und einem Endgerät, welches einem Nutzer zugeordnet ist, eine Identifikations-Applikation auf dem Endgerät und weiterhin eine Personalisierungs-Applikation und eine Identitätsprovider-Applikation ausgeführt werden. Das Verfahren umfasst hierbei Folgendes: Übertragen einer Anfrage zum Übermitteln eines dem Nutzer zugeordneten Identitätsattributs von der Personalisierungs-Applikation an die Identitätsprovider-Applikation; Übertragen des Identitätsattributs von der Identitätsprovider-Applikation an die Personalisierungs-Applikation, nachdem von dem Nutzer eine Zustimmung zum Übertragen des Identitätsattributs durch die Identitätsprovider-Applikation empfangen wurde; Erzeugen eines asymmetrischen Schlüsselpaares mit einem öffentlichen und einem privaten Schlüssel durch die Identifikations-Applikation auf dem Endgerät; Übertragen des öffentlichen Schlüssels von der Identifikations-Applikation auf dem Endgerät an die Personalisierungs-Applikation; Erzeugen eines elektronischen Zertifikats für den öffentlichen Schlüssel durch die Personalisierungs-Applikation und Speichern des elektronischen Zertifikats zu einer ersten Public-Key-Infrastruktur der Personalisierungs-Applikation in einem Datenspeicher, weiterhin umfassend: Erzeugen eines Hash-Werts für das Identitätsattribut und Aufnehmen des Hash-Werts in das elektronische Zertifikat. Das Identitätsattributs wird verschlüsselt und zusammen mit dem elektronischen Zertifikat von der Personalisierungs-Applikation an die Identifikations-Applikation auf dem Endgerät übertragen. Beides wird dort in einer lokalen Speichereinrichtung des Endgeräts gespeichert.

Der Erfindung liegt die Aufgabe zugrunde, ein verbessertes Verfahren zum Freigeben von Identitätsattributen zu schaffen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum Freigeben von ein oder mehreren Identitätsattributen ein oder mehrerer auf einem mobilen Endgerät gespeicherten elektronischen Identitäten für ein auslesendes Computersystem. Auf dem mobilen Endgerät ist eine Mehrzahl elektronischer Identitäten gespeichert. Das Freigeben der Identitätsattribute setzt ein erfolgreiches Authentifizieren des auslesenden Computersystems voraus. Das Authentifizieren des auslesenden Computersystems umfasst:

- Empfangen einer Leseanfrage des auslesenden Computersystems zum Auslesen ein oder mehrere Identitätsattribute ein oder mehrerer auszulesender Typen von elektronischen Identitäten zusammen mit einem Lesezertifikat des auslesenden Computersystems, wobei das Lesezertifikat Leserechte des auslesenden Computersystems auf Identitätsattribute einer Mehrzahl verschiedener Typen elektronischer Identitäten definiert,

- Zentrales Ausführen des Authentifizierens des auslesenden Computersystems, wobei das Authentifizieren ein Validieren einer Signatur des Lesezertifikats unter Verwendung eines auf dem mobilen Endgerät hinterlegten Root-Zertifikats umfasst,

- auf ein erfolgreiches Authentifizieren des auslesenden Computersystems hin, Bestimmen einer Gruppe von ein oder mehreren elektronischen Identitäten mit denjenigen auf dem mobilen Endgerät gespeicherten elektronischen Identitäten, die zu einem der Typen von elektronischen Identitäten gehören, für welche das Lesezertifikat Leserechte definiert,

- Identifizieren von ein oder mehreren elektronischen Identitäten innerhalb der bestimmten Gruppe von elektronischen Identitäten, die zu einem der auszulesenden Typen von elektronischen Identitäten gemäß Leseanfrage gehören,

- Senden von Authentifizierungsbestätigungen an ein oder mehrere auf dem mobilen Endgerät installierte Applikationen, welche jeweils ein oder mehrere der identifizierten elektronischen Identitäten verwalten, wodurch Leserechte des auslesenden Computersystems auf die entsprechenden elektronischen Identitäten bestätigt werden.

Ausführungsformen können den Vorteil haben, dass sie ein Bereitstellen einer Mehrzahl von elektronischen Identitäten auf einem mobilen Endgerät ermöglichen. Die entsprechenden elektronischen Identitäten werden beispielsweise jeweils von einer auf dem mobilen Endgerät installierten Applikation verwaltet. Zur kryptographischen Absicherung der entsprechenden elektronischen Identitäten, insbesondere zur sicheren Verwahrung Katalysator Schlüssel, welche den entsprechenden Identitäten zugeordnet sind, umfasst das mobile Endgerät ein oder mehrere Sicherheitselemente. Beispielsweise wird für jede der elektronischen Identitäten jeweils ein Sicherheitselement bereitgestellt. Beispielsweise teilen sich mehrere elektronische Identitäten ein gemeinsames Sicherheitselement, wobei jedoch jeder der elektronischen Identitäten jeweils eine individuelle Sub-Security-Domain, d.h. ein gesicherter Speicherbereich, des Sicherheitselements zugeordnet ist. Beispielsweise ist für jede der von dem mobilen Endgerät bereitgestellten elektronischen Identitäten jeweils eine individuelle Applikation auf dem mobilen Endgerät installiert. Beispielsweise verwaltet eine auf dem mobilen Endgerät installierte Applikation eine Mehrzahl von elektronischen Identitäten.

Ausführungsformen können ferner den Vorteil haben, dass ein zentrales Ausführen eines Authentifizierens sowie einer Berechtigungsprüfung eines auslesenden Computersystems implementiert werden kann. Somit wird es beispielsweise ermöglicht, dass bei einem Auslesen von Identitätsattributen, welche einer Mehrzahl von elektronischen Identitäten entstammen, das Authentifizieren des auslesenden Computersystems sowie das Prüfen der Leseberechtigung des entsprechenden auslesenden Computersystems auf die entsprechenden Identitätsattribute bzw. die entsprechende Mehrzahl von elektronischen Identitäten nur einmal zu erfolgen hat.

Zunächst empfängt das mobile Endgerät eine Leseanfrage des auslesenden Computersystems zum Auslesen ein oder mehrerer Identitätsattribute ein oder mehrerer auslesender Typen von elektronischen Identitäten. Unterschiedliche Typen von elektronischen Identitäten umfassen unterschiedliche Typen von Identitätsattributen. Dies bedeutet beispielsweise, dass bei ein und demselben Nutzer eine Mehrzahl von elektronischen Identitäten zugeordnet sein können, welche jeweils eine unterschiedliche Zusammenstellung von Identitätsattributen des entsprechenden Nutzers umfassen. Beispielsweise sind nur diese elektronischen Identitäten unterschiedlichen Typs auf dem mobilen Endgerät gespeichert. Möchte ein auslesendes Computersystem eine bestimmte Kombination von Identitätsattributen auslesen, welche nicht von einem Typ von elektronischer Identität umfasst, so besteht die Notwendigkeit, eine Mehrzahl von elektronischen Identitäten auszulesen, welche zusammen die gewünschte Kombination von Identitätsattributen bereitstellen.

Die Leseanfrage umfasst ferner ein Lesezertifikat, welches Leserechte des auslesenden Computersystems auf Identitätsattribute definiert bzw. nachweist. Im Zuge des Authentifizierens des auslesenden Computersystems wird die Validität des Lesezertifikats durch eine Signaturprüfung ausgeführt. Im Zuge der Signaturprüfung wird ein im mobilen Endgerät hinterlegtes Rootenzertifikat verwendet. Das Lesezertifikat weist eine Signatur auf, d.h. ist mit einem Signaturschlüssel signiert, bei welchem es sich um einen privaten kryptographischen Schlüssel eines asymmetrischen Signaturschlüsselpaars handelt. Diese Signatur kann beispielsweise mit einem Signaturprüfschlüssel geprüft werden, bei welchem es sich beispielsweise um einen öffentlichen kryptographischen Schlüssel des asymmetrischen Signaturschlüsselpaars handelt. Der Signaturprüfschlüssel wird entweder von dem Root-Zertifikat bereitgestellt oder von einem Zertifikat einer Zertifikatskette, an deren Ende das Root-Zertifikat steht. Die entsprechenden weiteren Zertifikate der Zertifikatskette neben dem Root-Zertifikat werden beispielsweise zusammen mit dem Lesezertifikat empfangen. Alternativ können die entsprechenden Zertifikate von dem mobilen Endgerät über ein Netzwerk abgerufen werden oder die entsprechenden Zertifikate können auf dem mobilen Endgerät hinterlegt sein, beispielsweise zusammen mit dem Root-Zertifikat.

Damit das Lesezertifikat einen gültigen Berechtigungsnachweis für die Leseanfrage darstellt, muss das Lesezertifikat Leserechte des auslesenden Computersystems für alle auszulesenden Typen von elektronischen Identitäten nachweisen. Auf ein erfolgreiches Authentifizieren des auslesenden Computersystems hin wird bestimmt, für welche der auf dem mobilen Endgerät gespeicherten elektronischen Identitäten das Lesezertifikat Leserechte definiert. Innerhalb dieser bestimmten Gruppe von elektronischen Identitäten werden diejenigen elektronischen Identitäten identifiziert, die zu einem auszulesenden Typ von elektronischen Identitäten gemäß Leseanfrage gehören. An die entsprechend identifizierten elektronischen Identitäten bzw. die entsprechenden elektronischen Identitäten verwaltenden Applikationen werden Authentifizierungsbestimmungen gesendet, welche eine erfolgreiche Authentifizierung und Berechtigungsprüfung des auslesenden Computersystems zum Auslesen der entsprechenden elektronischen Identitäten bestätigen. Mit anderen Worten bestätigt die Authentifizierungsbestätigung neben einer erfolgreichen Authentifizierung des auslesenden Computersystems ferner bestehende Leserechte des auslesenden Computersystems auf die entsprechenden elektronischen Identitäten.

Eine Authentifizierung bezeichnet eine Verifizierung einer behaupteten Eigenschaft einer Entität, wie etwa einem Nutzer des mobilen Endgeräts. Im Zuge einer Authentifizierung wird beispielsweise ein entsprechender von dem Nutzer erbrachter Nachweis verifiziert. Die Entität führt durch ihren Beitrag zur Authentifizierung, d.h. durch Bereitstellen entsprechender Nachweise wie Authentifizierungsdaten bzw. Authentifizierungsfaktoren zur Prüfung, eine Authentisierung durch.

Eine Authentifizierung des Nutzers bezüglich der behaupteten Eigenschaft der Authentizität, beispielsweise der Authentizität seiner Person bzw. Identität, erlaubt es dem authentifizierten Nutzer weitere Aktionen durchzuführen. Beispielsweise werden dem Nutzer Zugangsrechte eingeräumt. Ein erfolgreich authentifizierter Nutzer gilt als authentisch. Eine abschließende Bestätigung einer Authentifizierung kann eine Autorisierung umfassen.

Der Nutzer kann sich auf verschiedene Weisen authentisieren. Er kann beispielsweise einen Nachweis einer Kenntnis, wie einer PIN oder einem Passwort, vorlegen, einen Nachweis eines Besitzes, wie etwa eines kryptographischen Schlüssels, eines Zertifikats oder eines elektronischen Geräts, und/oder einen Nachweis von Eigenschaften seiner Person selbst, wie biometrische Merkmale oder Verhaltensmerkmale. Beispielsweise wird der entsprechende Nachweis durch einen Authentifizierungssensor des mobilen Endgeräts in Form von Authentifizierungsdaten des Nutzers erfasst und von einem Sicherheitselement des mobilen Endgeräts mit einem oder mehreren hinterlegten Referenzwerten verglichen. Bei dem die erfassten Authentifizierungsdaten auswertenden Sicherheitselement handelt es sich beispielsweise um ein Sicherheitselement des Betriebssystems des mobilen Endgeräts. Im Falle einer ausreichenden Übereinstimmung zwischen den erfassten Authentifizierungsdaten und den hinterlegten Referenzwerten, bestätigt das Sicherheitselement eine erfolgreiche Authentifizierung des Nutzers. Beispielsweise umfasst eine Bestätigung der erfolgreichen Authentifizierung des Nutzers ein Ausführen eines Challenge-Response-Verfahrens durch das bestätigende Sicherheitselement.

Unter einem mobilen Endgerät wird ein mobiles tragbares Kommunikationsgerät, wie beispielsweise ein Smartphone, ein Tablet oder eine Smartwatch verstanden.

Unter einem Authentifizierungssensor wird ein Sensor zum Erfassen von Authentifizierungsdaten des Nutzers des mobilen Endgeräts verstanden. Die Authentifizierungsdaten können beispielsweise biometrische Daten des Nutzers umfassen. Der Authentifizierungssensor kann zum Erfassen biometrischer Daten des Nutzers konfiguriert sein. Biometrische Daten können beispielsweise umfassen: Fingerabdruckdaten, Körpergeometriedaten/Anthropometriedaten, wie etwa Gesichts-, Hand-, Ohrgeometriedaten, Handlinienstrukturdaten, Venenstrukturdaten, wie etwa Handvenenstrukturdaten, Irisdaten, Retinadaten, Stimmerkennungsdaten, Nagelbettmuster. Der Authentifizierungssensor kann beispielsweise eine Kamera des mobilen Endgeräts umfassen. Die Authentifizierungsdaten können beispielsweise ein Wissen des Nutzers umfassen, wie eine PIN oder Passwort. Der Authentifizierungssensor kann eine Eingabevorrichtung zur Eingabe von Authentifizierungsdaten, wie etwa eine PIN oder ein Passwort umfassen. Die Eingabevorrichtung kann beispielsweise eine Tastatur und/oder einen Touchscreen umfassen.

Ein Challenge-Response-Verfahren stellt ein sicheres Authentifizierungsverfahren einer ersten Instanz gegenüber einer zweiten Instanz auf Basis von Wissen dar. Beispielsweise wird das erste Sicherheitselement durch das Sicherheitsapplet des zweiten Sicherheitselements unter Verwendung eines Challenge-Response-Verfahrens authentifiziert. Gleichzeitig stellt die Response eine Bestätigung einer erfolgreichen Nutzerauthentifizierung dar, falls die Response nur unter der Voraussetzung einer erfolgreichen Nutzerauthentifizierung durch das erste Sicherheitselement erzeugt wird. Somit weiß das Sicherheitsapplet, im Falle eines erfolgreichen Challenge-Response-Verfahrens nicht nur, dass die Nutzerauthentifizierung bestätigt wurde, sondern dass diese durch das erste Sicherheitselement bestätigt wurde und somit valide ist.

Im Zuge eines Challenge-Response-Verfahren stellt eine erste Instanz einer zweiten Instanz eine Aufgabe ("Challenge"), für welche die zweite Instanz eine korrekte Antwort ("Response") liefern muss.

Beispielsweise erzeugt die erste Instanz eine Zufallszahl ("Nonce") und sendet diese an die zweite Instanz. Die zweite Instanz verwendet beispielsweise ein gemeinsames Geheimnis für eine kryptographische Transformation des Nonce und sendet das Resultat als Response zum Zwecke einer Authentifizierung der zweiten Instanz an die erste Instanz. Beispielsweise wird das Nonce mit dem gemeinsamen Geheimnis kombiniert und eine kryptographische Hashfunktion oder eine Verschlüsselung auf diese Kombination angewendet. Alternativer Weise kann das gemeinsame Geheimnis, etwa ein symmetrischer kryptographischer Schlüssel, zum Verschlüsseln des Nonce verwendet werden. Die erste Instanz, welche sowohl das Nonce als auch das gemeinsame Geheimnis kennt kann beispielsweise dieselbe Berechnung wie die zweite Instanz ausführen und/oder eine inverse Berechnung ausführen, z.B. das verschlüsselte Nonce unter Verwendung des gemeinsamen Geheimnisses wieder entschlüsseln. Stimmt das Ergebnis der Berechnung durch die erste Instanz mit dem Ergebnis der Berechnung der zweiten Instanz oder mit der Challenge überein, ist das Challenge-Response-Verfahren erfolgreich und die zweite Instanz erfolgreich authentifiziert.

Ferner kann ein Challenge-Response-Verfahren auch auf einem asymmetrischen Kryptosystem beruhen und dem Nachweis eines Besitzes eines privaten und damit geheimen kryptographischen Schlüssels durch die zweite Instanz gegenüber der ersten Instanz dienen. Dabei kennt nur die zweite Instanz den entsprechenden privaten kryptographischen Schlüssel, welchen sie für eine kryptographische Transformation der Challenge, z.B. einer Nonce, verwendet. Bei der entsprechenden kryptographischen Transformation kann es sich beispielsweise um ein digitales Signieren handeln. Die erste Instanz kann unter Verwendung eines dem privaten kryptographischen Schlüssel zugehörigen öffentlichen kryptographischen Schlüssels anhand der Response prüfen, ob die zweite Instanz tatsächlich über Kenntnis des privaten kryptographischen Schlüssels verfügt, ohne dass die erste Instanz im Zuge der Prüfung selbst Kenntnis von dem privaten kryptographischen Schlüssel erlangt.

Unter einem Sicherheitselement, auch "Secure Element" oder "SE" genannt, wird ein gesichertes Element eines mobilen Endgeräts verstanden, welches kryptographische Mittel bereitstellt. Diese kryptographischen Mittel sind gegen Manipulation geschützt und beispielsweise über kryptographische Schlüssel nur für autorisierte Dienste und Anwendungen zugänglich. Insbesondere können die kryptographischen Mittel beispielsweise nur durch autorisierte Dienste und Anwendungen in das Sicherheitselement eingebracht, ergänzt, verändert und/oder gelöscht werden. Ein Sicherheitselement bietet mithin eine manipulationssichere Plattform, beispielsweise implementiert in Form eines sicheren Ein-Chip-Mikrocontroller, auf welcher Applets und/oder vertrauliche und/oder kryptographische Daten gemäß vordefinierten Regeln und Sicherheitsanforderungen von zuverlässig identifizierten vertrauenswürdigen Instanzen gespeichert und so berechtigten Anwendungsprogrammen und/oder Betriebssystemen zur Verfügung gestellt werden können. Ein Sicherheitselement kann eingebettete oder integriert sein, beispielsweise zerstörungsfrei lösbar oder fest verbunden, d.h. nicht zerstörungsfrei lösbar, eingebracht sein. Das Sicherheitselement kann beispielweise eine SIM, UICC, SmartMicroSD, Smartcard, eSE, eSIM oder eUICC umfassen. Beispielsweise sind auf einem Sicherheitselement kryptographische Schlüssel gespeichert, d.h. das Sicherheitselement umfasst einen Datentresor für kryptographische Schlüssel bzw. einen "Key Store". Ein solcher Key-Store bzw. Sicherheitselement kann auch als Teil des Hauptprozessors implementiert sein, beispielsweise in einer TEE (Trusted Exccecution Environment). Beispielsweise kann das erste Sicherheitselement unter Verwendung einer TEE implementiert sein. Sicherheitselemente sind beispielsweise als Hardware und/oder Firmware implementiert. Nach Ausführungsformen können Sicherheitselemente bzw. Key Stores auch als Software implementiert sein. Zwei Sicherheitselemente sind beispielsweise unabhängig voneinander, wenn es keine gemeinsame Instanz gibt, welche zugriffsberechtigt für beide Sicherheitselemente ist.

Ein Anwendungsprogramm, auch Applikation oder kurz App genannt, bezeichnet ein Computerprogramm, welches nicht systemtechnische Funktionalität bereitstellt, unterstützt und/oder deren Bearbeitung ermöglicht.

Unter einem Applet wird ein Computerprogramm verstanden, welches nicht als eigenständige Anwendungsprogramm betrieben wird. Der Begriff "Applet" setzt sich aus den englischen Worten "Application", d.h. Anwendung bzw. Anwendungsprogramm und "Snippet", d.h. Schnipsel, zusammen.

Ein Betriebssystem bezeichnet ein Computerprogramm oder eine Zusammenstellung von Computerprogrammen, welche systemtechnische Funktionalitäten bereitstellen, unterstützen und/oder deren Bearbeitung ermöglichen. Durch ein Betriebssystem werden Systemressourcen zur Verfügung gestellt. Systemressourcen bezeichnen Systemelemente bzw. Hardwarekomponenten eines Computers, die von Prozessen zur korrekten Ausführung benötigt werden.

Bei einem Computer bzw. einem Computersystem kann es sich zum Beispiel um einen stationären Computer, wie etwa einen Personal Computer (PC), Serviceterminal oder einen Server, oder um einen mobilen tragbaren Computer, wie etwa einen Laptop, ein Tablet, ein Smartphone oder einen andern Smart Device, handeln. Der Computer kann eine Schnittstelle zur Verbindung mit dem Netzwerk umfassen, wobei es sich bei dem Netzwerk um ein privates oder öffentliches Netzwerk handeln kann, insbesondere das Internet. Je nach Ausführungsform kann diese Verbindung auch über ein Mobilfunknetz hergestellt werden.

Unter einem "Nutzer-Computersystem" wird hier ein Computersystem verstanden, auf welches der Nutzer Zugriff hat. Hierbei kann es sich zum Beispiel um eine Desktop-Computer (PC), ein Serviceterminal, oder ein mobiles tragbares Kommunikationsgerät, wie etwa ein Laptop, ein Tablet, ein Smartphone oder einen anderen Smart Device handeln.

Unter einem "Dienst-Server" wird hier ein Server bzw. ein Computersystem verstanden, auf welchem ein Serverprogramm ausgeführt wird und das die Möglichkeit bereitstellt einen angebotenen Dienst über ein Netzwerk zu initiieren bzw. in Anspruch zu nehmen und/oder auszuführen.

Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einem "Speicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten, insbesondere von statischen kryptographischen Schlüsseln, Attributen oder Kennungen, verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Eine Kommunikationsschnittstelle kann beispielsweise eine Kommunikation über ein Netzwerk ermöglichen. Je nach Konfiguration kann eine Kommunikationsschnittstelle beispielsweise eine kabellose Kommunikation nach einem Mobilfunkstandard, Bluetooth-, RFID-, WiFi und/oder NFC-Standard bereitstellen. Je nach Konfiguration kann eine Kommunikationsschnittstelle beispielsweise eine kabelbasierte Kommunikation bereitstellen. Bei der Kommunikationsschnittstelle kann es sich um eine interne Schnittstelle oder um eine externe Schnittstelle handeln.

Bei den verschlüsselten Kommunikationskanälen handelt es sich beispielsweise um verschlüsselte Ende-zu-Ende-Verbindungen. Unter einer "verschlüsselten Ende-zu-Ende-Verbindung" bzw. einem "verschlüsselten Ende-zu-Ende-Übertragungskanal" wird hier eine Verbindung zwischen einem Sender und einem Empfänger mit einer Ende-zu-Ende-Verschlüsselung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, sodass Zwischenstationen aufgrund der Verschlüsslung keine Kenntnis vom Inhalt der übertragenen Daten erlangen können. Die Verbindung wird durch die Verschlüsselung kryptographisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweiter der symmetrischen Schlüssel zum Authentifizieren des Senders der Nachricht, etwa mittels Message Authentication Code (MAC)-Algorithmen, dient. Beispielsweise werden für einen verschlüsselten Kommunikationskanal im Zuge des Aufbaus ephemere Schlüssel zur Verschlüsselung ausgehandelt, welche mit einer Beendigung des Kommunikationskanals ihre Gültigkeit verlieren. Eine Verwendung unterschiedlicher ephemerer Schlüssel für unterschiedliche Kommunikationskanäle ermöglicht es eine Mehrzahl von Kommunikationskanälen parallel zueinander zu betreiben.

Ein verschlüsselter Kommunikationskanal kann beispielsweise unter Verwendung des Transport Layer Security (TLS) Protokolls aufgebaut werden, beispielsweise als Teil des Hypertext Transfer Protocol Secure (HTTP) Protokolls.

Asymmetrische Schlüsselpaare werden für eine Vielzahl von Kryptosystemen eingesetzt und spielen bei der sicheren Übertragung elektronischer Daten eine wichtige Rolle. Ein asymmetrisches Schlüsselpaar besteht aus einem öffentlichen Schlüssel, welcher zur Ver- und/oder Entschlüsselung von Daten verwendet wird und an Dritte, beispielsweise an einen Sender oder Empfänger von Daten, weitergegeben werden darf, sowie einem privaten Schlüssel, welcher zur Ver- und/oder Entschlüsselung aber auch zur Signatur von Daten verwendet wird und im Regelfall geheim gehalten werden muss. Der öffentliche Schlüssel ermöglicht es jedermann Daten für den Inhaber des privaten Schlüssels zu verschlüsseln oder mit dem privaten Schlüssel erstellte digitale Signaturen zu prüfen. Ein privater Schlüssel ermöglicht es seinem Inhaber mit dem öffentlichen Schlüssel verschlüsselte Daten zu entschlüsseln oder digitale Signaturen von Daten zu erstellen.

Eine digitale Signatur von Daten umfasst beispielsweise ein Bilden eines Prüfwerts der Daten, wie etwa eines Hashwerts, welcher mit einem als Signaturschlüssel verwendeten privaten kryptographischen Schlüssel eines asymmetrischen Schlüsselpaars verschlüsselt wird. Im Falle einer Signatur kennt nur der Signierende den zum Erstellen der Signatur verwendeten privaten kryptographischen Schlüssel, d.h. Signaturschlüssel, des für die Signatur verwendeten asymmetrischen Schlüsselpaars. Der Signaturempfänger verfügt lediglich über den öffentlichen Schlüssel, d.h. Signaturprüfschlüssel, des für die Signatur verwendeten asymmetrischen Schlüsselpaars. Der Signaturempfänger kann die Signatur mithin prüfen, aber nicht selbst berechnen. Für eine Signaturprüfung berechnet der Signaturempfänger beispielsweise den Prüfwert der signierten Daten und vergleicht diesen mit dem Ergebnis einer Entschlüsselung der Signatur unter Verwendung des Signaturprüfschlüssels. Stimmt der berechnet Hashwert mit dem Ergebnis der Entschlüsselung überein ist die Signatur korrekt. Wird zudem die Authentizität des Signaturprüfschlüssels, etwa durch ein Zertifikat, insbesondere ein PKI-Zertifikat, bestätigt, ist die Signatur valide.

Unter einem "Zertifikat" wird hier ein digitales Zertifikat verstanden, welches auch als Public-Key-Zertifikat (PKI-Zertifikat) bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person, Institution oder einer Vorrichtung, zuzuordnen. Zur kryptographischen Sicherung und zum Nachweis der Authentizität der Daten des Zertifikates, sind diese von einem Zertifikatsaussteller signiert. Durch PKI-Zertifikate, welche auf asymmetrischen Schlüsselpaaren basieren, und bis auf ein Root- bzw. Wurzelzertifikat jeweils von einem Zertifikatsaussteller mit einem Signaturschlüssel signiert sind, dessen zugehöriger Signaturprüfschlüssel dem Zertifikatsaussteller durch ein PKI-Zertifikat des entsprechenden Zertifikataussteller zugeordnet ist, wird eine so genannte Public Key Infrastructure (PKI) realisiert. Beispielsweise kann das Zertifikat dem Standard X.509 oder einem anderen Standard entsprechen. Beispielsweise handelt es sich bei dem Zertifikat um ein Card Verifiable Certificate (CVC). Ein Berechtigungszertifikat, wie beispielsweise ein Lese- und/oder Schreibzertifikat, umfasst strukturierte Daten, welche zusätzlich Rechte der Identität definieren, wie beispielsweise ein Lese- und/oder Schreibrecht.

Die PKI stellt ein System zum Ausstellen, Verteilen und Prüfen digitaler Zertifikate bereit. Ein digitales Zertifikat kann in einem asymmetrischen Kryptosystem die Authentizität eines öffentlichen kryptographischen Schlüssels und seinen zulässigen Anwendungs- und Geltungsbereich bestätigen. Das digitale Zertifikat ist selbst durch eine digitale Signatur geschützt, deren Echtheit bzw. Authentizität mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des dadurch zertifizierten Schlüssels, müssen sich die Teilnehmer der PKI beispielsweise ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Digitale Zertifikate werden beispielsweise durch eine unabhängige, glaubwürdige Instanz (Zertifizierungsdienstanbieter/ZDA oder Vertrauensdienstanbieter/VDA), d.h. die das Zertifikat zuteilende Zertifizierungsstelle, bestätigen. Zertifikate können einem breiten Personenkreis zur Verfügung gestellt werden, um diesem eine Prüfung elektronischer Signaturen auf Authentizität und Gültigkeit zu ermöglichen. Ein Zertifikat kann einer elektronischen Signatur zugeordnet sein und einen Signaturprüfschlüssel in Form des öffentlichen Schlüssels bereitstellen, wenn der zu dem Signaturprüfschlüssel gehörende private Schlüssel als Signaturschlüssel verwendet wurde. Dadurch, dass ein ZDA /VDA ein Zertifikat in Assoziation mit einem öffentlichen Schlüssel der Allgemeinheit zur Verfügung stellt, ermöglicht sie es den Nutzern asymmetrischer Kryptosysteme den öffentlichen Schlüssel einer Identität, beispielsweise einer Person, einer Organisation, oder Computersystem, zuzuordnen.

Nach Ausführungsformen kann die elektronische Identität eine offiziell anerkannte Identität, wie zum Beispiel eine auf Grundlage eines offiziellen Ausweisdokuments, etwa eines Personalausweises oder Reisepasses, erstellte elektronische Identität umfassen.

Die elektronische Identität eines Nutzers ist eindeutig, d.h. einzigartig und unverwechselbar. Sie wird auf der Grundlage von Merkmalen, sog. Identitätsattributen, definiert. Eine elektronische Identität umfasst beispielsweise personenbezogenen Daten. Personenbezogene Daten bezeichnen Daten, welche eine Identifikation einer Person ermöglichen oder einer Person zuordenbar sind, auf welche die personenbezogenen Daten bezogen sind.

Ein Nutzer kann über eine Mehrzahl von unterschiedlichen, anwendungsspezifischen elektronischen Identitäten verfügen. Diese elektronischen Identitäten können unterschiedlichen Sicherheitsanforderungen entsprechen.

Nach Ausführungsformen kann eine auf dem mobilen Endgerät gespeicherte und von dem ID-Anwendungsprogramm bereitgestellte bzw. verwaltete elektronische Identität ohne zusätzliche Hardware neben dem mobilen Endgerät zur Identifizierung und Authentifizierung des Nutzers des mobilen Endgeräts verwendet werden.

Identitätsattribute werden beispielsweise von Service-Providern bzw. Dienstanbietern für Online-Dienste nachgefragt. Nach Ausführungsformen erfolgt eine Übertragung der von einem Dienstanbieter für seinen Online-Dienst benötigten Identitätsattribute verschlüsselt und authentisch. Beispielsweise wird unter Verwendung von Lesezertifikaten geregelt, wer auf welche Identitätsattribute zugreifen darf bzw. eine Leseberechtigung für diese besitzt. Beispielsweise werden die benötigten Identitätsattribute von einem dazu mittels Lesezertifikats berechtigten ID-Provider ausgelesen und dem anfragenden Dienstanbieter zur Verfügung gestellt. Nach Ausführungsformen stellt der ID-Provider dem anfragenden Dienstanbieter nur eine Bestätigung des oder der angefragten Identitätsattribute zur Verfügung.

Eine Zustimmung des Nutzers zur Verwendung der Identitätsattribute und/oder eine Nutzerauthentifizierung erfolgt beispielsweise unter Prüfung ein oder mehrerer Authentifizierungsfaktoren, wie etwa Passwort, PIN, Fingerabdruck oder Gesichtserkennung.

Nach Ausführungsformen umfassen die Authentifizierungsbestätigungen jeweils eine Angabe derjenigen Identitätsattribute der identifizierten elektronischen Identitäten, welche die Applikation verwaltet, an welche die entsprechende Authentifizierungsbestätigung gesendet wird, und für welche das Lesezertifikat Leserechte des auslesenden Computersystems definiert.

Ausführungsformen können den Vorteil haben, dass falls das Lesezertifikat für ein oder mehrere Typen von elektronischen Identitäten kein Leserecht auf alle Identitätsattribute der entsprechenden Typen von elektronischen Identitäten gewährt. Falls das Lesezertifikat beispielsweise nur Leserechte auf bestimmte Identitätsattribute gewährt, kann dies in der Authentifizierungsbestätigung definiert werden, sodass die empfangene Applikation, welche die entsprechende elektronische Identität verwaltet, Kenntnis davon erlangt, für welche der Identitätsattribute der entsprechenden elektronischen Identität das auslesende Computersystem Leserechte besitzt. Falls das Lesezertifikat jeweils für alle Identitätsattribute der angegebenen Typen von elektronischen Identitäten Leserechte gewährt, ist es nicht notwendig, dass die Authentifizierungsbestätigung einzelne Identitätsattribute aufzählt, auf welche das auslesende Computersystem Leserechte besitzt.

Nach Ausführungsformen wird das zentrale Authentifizieren des auslesenden Computersystems mit dem Validieren des Lesezertifikats durch ein auf dem mobilen Endgerät installiertes Betriebssystem ausgeführt.

Ausführungsformen können den Vorteil haben, dass dem Betriebssystem ein Sicherheitselement zur Verfügung steht, in welches das Root-Zertifikat zum Validieren des Lesezertifikats gespeichert sein kann. Beispielsweise wird das Root-Zertifikat mit den Sicherheitselementen des Betriebssystems im Zuge der Herstellung des mobilen Endgeräts bzw. im Zuge einer Provisionierung des mobilen Endgeräts mit dem Betriebssystem eingebracht.

Nach Ausführungsformen erfolgt das Authentifizieren durch das Betriebssystem unter Verwendung eines Sicherheitselements des Betriebssystems, in welchem das Root-Zertifikat zum Validieren des Lesezertifikats gespeichert ist.

Ausführungsformen können den Vorteil haben, dass das Sicherheitselement des Betriebssystems einen privaten kryptographischen Schlüssel eines dem Betriebssystem zugeordneten asymmetrischen Schlüsselpaars bereitstellen kann, mit welchem die Authentifizierungsbestätigungen signiert werden können. Mithin kann das Sicherheitselement des Betriebssystems kryptographische Schlüssel zum Ausführen kryptographischer Protokolle bereitstellen, insbesondere können in dem Sicherheitselement private kryptographische Schlüssel gespeichert werden.

Nach Ausführungsformen werden die Authentifizierungsbestätigungen mit einem dem Betriebssystem zugeordneten privaten kryptographischen Schlüssel signiert, welcher in dem Sicherheitselements des Betriebssystems gespeichert ist.

Nach Ausführungsformen erfolgt das zentrale Authentifizieren des auslesenden Computersystems mit dem Validieren des Lesezertifikats durch eine auf dem mobilen Endgerät installierte Applikation.

Ausführungsformen können den Vorteil haben, dass das zentrale Authentifizieren durch eine auf dem mobilen Endgerät installierte Applikation erfolgen kann. Bei der entsprechenden Applikation kann es sich beispielsweise um eine die elektronischen Identitäten verwaltende Applikation handeln oder um eine für das Authentifizieren des auslesenden Computersystems vorgesehene Applikation. Der entsprechenden Applikation kann beispielsweise ein Sicherheitselement bzw. eine Sub-Security-Domain in einem Sicherheitselement des mobilen Endgeräts zugeordnet sein, welche die Applikation zum Authentifizieren des auslesenden Computersystems und/oder zum Erstellen der Authentifizierungsbestätigungen verwenden kann.

Nach Ausführungsformen ist der Applikation ein Applet zugeordnet, welches in einer der Applikation zugeordneten Sub-Security-Domain eines Sicherheitselements des mobilen Endgeräts installierte ist. Das Authentifizieren erfolgt unter Verwendung des Applets. Ferner ist das Root-Zertifikat zum Validieren des Lesezertifikats in der Sub-Security-Domain des Sicherheitselements des mobilen Endgeräts gespeichert.

Ausführungsformen können den Vorteil haben, dass in der der Applikation zugeordneten Sub-Security-Domain des Sicherheitselements das Root-Zertifikat für eine Signaturprüfung des Lesezertifikats in geschützter Form gespeichert sein kann.

Nach Ausführungsformen umfasst das mobile Endgerät eine Mehrzahl von Sicherheitselementen. Nach Ausführungsformen sind von ein oder mehreren der Applikationen Applets auf mehreren Sicherheitselemente gespeichert. Nach Ausführungsformen wählen die entsprechenden Applikationen aus, welches der mehren ihnen zugeordneten Applets sie zum Authentifizieren gegenüber dem auslesenden Computersystem verwenden.

Beispielsweise umfasst das Sicherheitselement eine Mehrzahl von Sub-Security-Domains. Nach Ausführungsformen sind Applets, welche unterschiedlichen Applikationen zugeordneten sind, auf einem gemeinsamen Sicherheitselement gespeichert. Beispielsweise umfasst das Sicherheitselement nur eine einzige Sub-Security-Domain. Nach Ausführungsformen sind Applets ein oder mehrerer der Applikationen jeweils auf einem applikationsindividuellen Sicherheitselement gespeichert.

Nach Ausführungsformen werden die Authentifizierungsbestätigungen mit einem der Applikation zugeordneten privaten kryptographischen Schlüssel signiert, welcher in der der Applikation zugeordneten Sub-Security-Domain des Sicherheitselements des mobilen Endgeräts gespeichert ist.

Ausführungsformen können den Vorteil haben, dass in der der Applikation zugeordneten Sub-Security-Domain des Sicherheitselements ein privater kryptographischer Schlüssel eines der Applikation zugeordneten asymmetrischen Schlüsselpaars sicher gespeichert sein kann. Der entsprechende private kryptographische Schlüssel kann zur Signatur der Authentifizierungsbestätigung verwendet werden.

Nach Ausführungsformen umfasst die Applikation das Root-Zertifikat zum Validieren des Lesezertifikats. Die gesamte Applikation oder ein das Root-Zertifikat umfassender Teil der Applikation weisen eine Signatur auf. Eine Voraussetzung zum Ausführen der Authentifizierung ist eine erfolgreiche Integritätsprüfung, welche eine Prüfung der Signatur umfasst.

Ausführungsformen können den Vorteil haben, dass, falls der Applikation keine Sub-Security-Domain eines Sicherheitselements zum Absichern des Authentifizierens des auslesenden Computersystems zur Verfügung steht, die Applikation das Root-Zertifikat beispielsweise selbst umfassen kann. Zur Absicherung des Root-Zertifikats kann die gesamte Applikation oder zumindest ein in das Root-Zertifikat passender Teil der Applikation eine Signatur aufweisen. Beispielsweise ist eine Voraussetzung zum Ausführen der Authentifizierung eine erfolgreiche Identitätsprüfung der Applikation bzw. des das Root-Zertifikat umfassenden Teils der Applikation. Eine entsprechende Identitätsprüfung umfasst beispielsweise eine Prüfung der Signatur.

Nach Ausführungsformen werden die Authentifizierungsbestätigungen von der Applikation unsigniert an die ein oder mehrere auf dem mobilen Endgerät installierte Applikationen gesendet, welche jeweils ein oder mehrere der identifizierten elektronischen Identitäten verwalten. In diesem Fall werden die Authentifizierungsbestätigungen beispielsweise unsigniert an die die identifizierten elektronischen Identitäten verwaltenden Applikationen gesendet.

Nach Ausführungsformen umfasst das Lesezertifikat einen ersten öffentlichen kryptographischen Schlüssel eines ersten asymmetrischen Schlüsselpaars des auslesenden Computersystems. Das Authentifizieren umfasst ferner:

- Extrahieren des ersten öffentlichen kryptographischen Schlüssels des auslesenden Computersystems aus dem Lesezertifikat,
- Erzeugen einer zufälligen Challenge,
- Senden der zufälligen Challenge an das auslesende Computersystem,
- Empfangen einer Response von dem auslesenden Computersystem, wobei die Response eine unter Verwendung eines ersten privaten kryptographischen Schlüssels des ersten asymmetrischen Schlüsselpaars des auslesenden Computersystems erstellte Signatur der Challenge umfasst,
- Validieren der Signatur der Challenge unter Verwendung der Challenge und des extrahierten ersten öffentlichen kryptographischen Schlüssels.

Ausführungsformen können den Vorteil haben, dass durch das entsprechende Challenge-Response-Verfahren geprüft werden kann, ob das auslesende Computersystem über den ersten privaten kryptographischen Schlüssel verfügt. Falls dies der Fall ist, so handelt es sich bei dem auslesenden Computersystem tatsächlich um diejenige Identität, welcher das Lesezertifikat zugeordnet ist. Mithin ist das auslesende Computersystem authentifiziert.

Nach Ausführungsformen sind den empfangenden Applikationen jeweils ein oder mehrere Applets zugeordnet, welche jeweils in einer der Applikation zugeordneten Sub-Security-Domain eines Sicherheitselements des mobilen Endgeräts installiert sind. Ein oder mehrere der empfangenden Applikationen authentisieren sich jeweils gegenüber dem auslesenden Computersystem. Das Authentisieren umfasst:

- Senden eines öffentlichen kryptographischen Schlüssels eines der Applikation zugeordneten asymmetrischen Schlüsselpaars an das auslesende Computersystem, wobei ein privater kryptographischen Schlüssel des asymmetrischen Schlüsselpaars in der der Applikation zugeordneten Sub-Security-Domain gespeichert ist,
- Berechnen eines mit dem auslesenden Computersystem geteilten Geheimnisses durch das der Applikation zugeordnete Applet unter Verwendung des privaten kryptographischen Schlüssels der Applikation und einem von dem auslesenden Computersystem empfangenen ephemeren zweiten öffentlichen kryptographischen Schlüssel des auslesenden Computersystems,
- Erzeugen einer Zufallszahl durch das Applet,
- Erzeugen eines gemeinsamen Authentisierungsschlüssels zum Authentisieren von Informationen im Zuge der Kommunikation zwischen der das Applet verwendeten Applikation und dem auslesenden Computersystem unter Verwendung des geteilten Geheimnisses und der erzeugten Zufallszahl,
- Erzeugen eines Authentisierungstoken durch das Applet unter Verwendung des Authentisierungsschlüssels und des ephemeren zweiten öffentlichen kryptographischen Schlüssels des auslesenden Computersystems zum Authentisieren der das Applet verwendenden Applikation gegenüber dem auslesenden Computersystem,
- Senden der Zufallszahl zusammen mit dem Authentisierungstoken zum Authentifizieren durch das auslesende Computersystem.

Ausführungsformen können den Vorteil haben, dass unter Verwendung der in den Sicherheitselementen installierten Applets der die elektronischen Identitäten verwaltenden Applikationen die entsprechenden Applikationen bzw. die von diesen verwalteten elektronischen Identitäten gegenüber dem auslesenden Computersystem authentisiert werden können. Das auslesende Computersystem empfängt den öffentlichen kryptographischen Schlüssel in der Applikation und kann unter Verwendung dieses öffentlichen kryptographischen Schlüssels sowie eines ephemeren zweiten privaten kryptographischen Schlüssels des den ephemeren zweiten öffentlichen kryptographischen Schlüssel umfassenden asymmetrischen Schlüsselpaars ebenfalls das geteilte Geheimnis berechnen. Auf den Empfang der Zufallszahl hin kann das auslesende Computersystem ebenfalls den gemeinsamen Authentifizierungsschlüssel berechnen. Unter Verwendung des so berechneten Authentifizierungsschlüssels und des ephemeren zweiten privaten kryptographischen Schlüssels kann das auslesende Computersystem zudem den empfangenen Authentisierungstoken validieren. Stimmt beispielsweise ein von dem auslesenden Computersystem unter Verwendung des berechneten Authentisierungsschlüssels und der empfangenen Zufallszahl berechnetes Authentisierungstoken mit dem empfangenen Authentisierungstoken überein, weist das auslesende Computersystem, dass sich die Applikation tatsächlich im Besitz des entsprechenden privaten kryptographischen Schlüssels des der Applikation zugeordneten asymmetrischen Schlüsselpaars befindet. Mithin ist die Applikation bzw. die von dieser verwaltete elektronische Identität authentifiziert.

Nach Ausführungsformen umfassen die Authentifizierungsbestätigungen jeweils den ephemeren zweiten öffentlichen kryptographischen Schlüssel des auslesenden Computersystems.

Ausführungsformen können den Vorteil haben, dass ferner ein ephemerer zweiter öffentlicher kryptographischer Schlüssel für eine sitzungsabhängige Verschlüsselung der Kommunikation zwischen dem auslesenden Computersystem und den die elektronischen Identitäten verwaltenden Applikationen bereitgestellt werden kann.

Nach Ausführungsformen wird der öffentliche kryptographische Schlüssel zusammen mit einem Zertifikat an das auslesende Computersystem gesendet. Nach Ausführungsformen hat das auslesende Computersystem Zugriff auf das Zertifikat, beispielsweise ist das Zertifikat in einem Speicher des auslesenden Computersystems gespeichert oder das Zertifikat ist von einem online zugänglichen Register abrufbar.

Nach Ausführungsformen empfängt die das Applet verwendende Applikation in Antwort auf das Senden des der Applikation zugeordneten öffentlichen kryptographischen Schlüssels von dem auslesenden Computersystem eine zweite Kopie des ephemeren zweiten öffentlichen kryptographischen Schlüssel des auslesenden Computersystems, welche die Applikation mit der ersten Kopie des ephemeren zweiten öffentlichen kryptographischen Schlüssel des auslesenden Computersystems aus der Authentifizierungsbestätigungen vergleicht. Eine Übereinstimmung beider Kopien ist eine Voraussetzung für das Berechnen des geteilten Geheimnisses.

Ausführungsformen können den Vorteil haben, dass die Applikation anhand der empfangenen zweiten Kopie des ephemeren öffentlichen kryptographischen Schlüssels des auslesenden Computersystems prüfen kann, ob die Kommunikation im Zuge des Authentisierens der Applikation tatsächlich mit dem bereits authentifizierten auslesenden Computersystem erfolgt.

Nach Ausführungsformen handelt es sich bei dem berechneten Authentisierungsschlüssel um einen identitätsspezifischen Authentisierungsschlüssel.

Ausführungsformen können den Vorteil haben, dass, falls die Applikation eine Mehrzahl elektronischer Identitäten verwaltet, jeweils identitätsspezifische Authentisierungsschlüssel erstellt werden können. Mit anderen Worten erfolgt in diesem Fall für jede der elektronischen Identitäten jeweils eine individuelle Authentisierung der Applikation gegenüber dem auslesenden Computersystem. Dabei wird für jede der elektronischen Identitäten jeweils ein identitätsspezifischer Authentisierungsschlüssel erstellt. Somit kann für jede der elektronischen Identitäten jeweils eine individuelle ephemere Verschlüsselung implementiert werden zur Übertragung von Identitätsattributen der entsprechenden elektronischen Identität.

Nach Ausführungsformen verwaltet jede der Applikationen genau eine elektronische Identität.

Nach Ausführungsformen handelt es sich bei der berechneten Zufallszahl um eine identitätsspezifische Zufallszahl.

Nach Ausführungsformen wird zum Berechnen des Authentisierungsschlüssels ferner ein Identifikator des Typs der von der Applikation verwalteten elektronischen Identität verwendet. Der Identifikator wird zusammen mit dem öffentlichen kryptographischen Schlüssel an das auslesende Computersystem gesendet.

Ausführungsformen können den Vorteil haben, dass durch den Identifikator des Typs der elektronischen Identität eine Individualisierung der Authentisierung für die entsprechende elektronische Identität bzw. den entsprechenden Typ elektronischer Identität implementiert werden kann.

Nach Ausführungsformen verwalten ein oder mehrere der Applikationen jeweils eine Mehrzahl von elektronischen Identitäten unterschiedlichen Typs.

Nach Ausführungsformen wird ein Identifikator des Typs der von der Applikation verwalteten elektronischen Identität zum Berechnen des Authentisierungsschlüssels verwendet, falls eine der Applikationen eine Mehrzahl von elektronischen Identitäten unterschiedlichen Typs verwendet.

Nach Ausführungsformen wird zum Berechnen der Zufallszahl ferner ein Identifikator des Typs der von der Applikation verwalteten elektronischen Identität verwendet wird.

Nach Ausführungsformen wird ein Identifikator des Typs der von der Applikation verwalteten elektronischen Identität zum Berechnen der Zufallszahl verwendet, falls eine der Applikationen eine Mehrzahl von elektronischen Identitäten unterschiedlichen Typs verwendet.

Nach Ausführungsformen handelt es sich bei dem Authentisierungsschlüssel um einen Schlüssel zum Erzeugen eines Message Authentication Codes. Bei dem Authentisierungstoken handelt es sich um einen unter Verwendung des Authentisierungsschlüssels erzeugten MAC-Code der Zufallszahl.

Die Authentizität der übertragen Identitätsattribute kann beispielsweise durch Verwendung eines Message Authentication Codes (MAC) sichergestellt werden. Ein MAC wird beispielsweise unter Verwendung eines MAC-Algorithmus berechnet, welchem zu schützende Daten, d.h. die Identitätsattribute, und ein kryptographischer Schlüssel, beispielsweise ein symmetrischer kryptographischer Schlüssel, als Eingabedaten zur Verfügung gestellt werden. Unter Verwendung dieser Eingabedaten berechnet der MAC-Algorithmus eine Prüfsumme, welche als MAC dient. Zum Berechnen von MACs können beispielsweise Blockchiffren oder Hash-Funktionen verwendet werden. Als MAC kann beispielsweise ein HMAC (Keyed-Hash Message Authentication Code) verwendet werden, für dessen Konstruktion eine kryptographische Hash-Funktion, wie beispielsweise der Secure Hash Algorithm (SHA), und ein geheimer kryptographischer Schlüssel, beispielsweise ein symmetrischer kryptographischer Schlüssel, verwendet wird.

Zur Sicherung einer Datenübertragung, beispielsweise einer Übertragung von Identitätsattributen, wird zwischen Sender, beispielsweise das Applet, und Empfänger, beispielsweise einem auslesenden Computersystem, ein kryptographischer Schlüssel, beispielsweise ein symmetrischer kryptographischer Schlüssel, vereinbart. Der Sender verwendet diesen kryptographischen Schlüssel zum Berechnen eines MACs der zu übertragenden Daten und sendet den berechneten MAC zusammen mit den zu übertragenden Daten an den Empfänger. Der Empfänger berechnet seinerseits einen MAC für die empfangenen Daten unter Verwendung des kryptographischen Schlüssels und vergleicht das Ergebnis mit dem empfangenen MAC. Im Falle einer Übereinstimmung zwischen berechnetem MAC und empfangenen MAC berechnet ist die Integritätsprüfung erfolgreich und die empfangenen Daten werden als authentisch angesehen.

Im Falle eines MAC müssen sowohl Sender als auch Empfänger Kenntnis von dem verwendeten kryptographischen Schlüssel haben im Gegensatz zu einer Verwendung von reinen Hashfunktionen oder von Signaturen. Im Falle von reinen Hashfunktionen kommen beispielsweise keine kryptographischen Schlüssel zum Einsatz. Falls die Hashfunktionen öffentlich sind, kann jeder den Hashwert berechnen, insbesondere für manipulierte Nachrichten. Im Falle einer Signatur kennt nur der Signierende den zum Erstellen der Signatur verwendeten privaten kryptographischen Schlüssel, d.h. Signaturschlüssel, eines für die Signatur verwendeten asymmetrischen Schlüsselpaars. Der Signaturempfänger verfügt lediglich über den öffentlichen Schlüssel, d.h. Signaturprüfschlüssel, des für die Signatur verwendeten asymmetrischen Schlüsselpaars. Der Signaturempfänger kann die Signatur mithin prüfen unter Verwendung des Signaturprüfschlüssels, aber nicht selbst berechnen.

Nach Ausführungsformen erzeugt das Applet ferner einen symmetrischen kryptographischen Schlüssel unter Verwendung des geteilten Geheimnisses und der Zufallszahl zum Verschlüsseln der Kommunikation zwischen der das Applet verwendenden Applikation und dem auslesenden Computersystem.

Ausführungsformen können den Vorteil haben, dass der symmetrische kryptographische Schlüssel eine Verschlüsselung der Kommunikation zwischen der Applikation und dem auslesenden Computersystem ermöglicht. Mit diesem symmetrischen kryptographischen Schlüssel können beispielsweise Identitätsattribute der von der entsprechenden Applikation verwalteten elektronischen Identität für eine Übertragung eines auslesenden Computersystems verschlüsselt werden. Somit kann eine applikationsindividuelle Verschlüsselung zwischen der entsprechenden Applikation und dem auslesenden Computersystem bereitgestellt werden.

Nach Ausführungsformen wird der symmetrische kryptographische Schlüssel durch das Applet zusammen mit dem gemeinsamen Authentisierungsschlüssels berechnet.

Nach Ausführungsformen handelt es sich bei dem berechneten symmetrischen kryptographischen Schlüssel um einen identitätsspezifischen symmetrischen kryptographischen Schlüssel.

Ausführungsformen können den Vorteil haben, dass eine identitätsspezifische Verschlüsselung implementiert werden kann. Dabei werden beispielsweise die Identitätsattribute der individuellen elektronischen Identitäten bzw. Typen von elektronischen Identitäten jeweils mit einem eigenen symmetrischen kryptographischen Schlüssel verschlüsselt. Dies kann vorteilhaft sein, falls eine Applikation eine Mehrzahl von elektronischen Identitäten verwaltet. Falls jede Applikation genau eine elektronische Identität verwaltet, stellt eine applikationsspezifische Verschlüsselung bereits eine identitätsspezifische Verschlüsselung dar.

Nach Ausführungsformen wird zum Berechnen des symmetrischen kryptographischen Schlüssels ferner ein Identifikator des Typs der von der Applikation verwalteten elektronischen Identität verwendet.

Ausführungsformen können den Vorteil haben, dass unter Verwendung des Identifikators des Typs von der Applikation verwalteten elektronischen Identität eine Berechnung eines identitätsspezifischen symmetrischen kryptographischen Schlüssels in effektiver und effizienter Weise ermöglicht werden kann.

Nach Ausführungsformen wurde der Identifikator zusammen mit dem öffentlichen kryptographischen Schlüssel an das auslesende Computersystem gesendet.

Nach Ausführungsformen wird ein Identifikator des Typs der von der Applikation verwalteten elektronischen Identität zum Berechnen des symmetrischen kryptographischen Schlüssels verwendet, falls eine der Applikationen eine Mehrzahl von elektronischen Identitäten unterschiedlichen Typs verwendet.

Nach Ausführungsformen handelt es sich bei dem auslesenden Computersystem um einen Server, welcher über ein Netzwerk mit dem mobilen Endgerät kommuniziert.

Ausführungsformen können den Vorteil haben, dass unter Verwendung des mobilen Endgeräts Identitätsattribute von elektronischen Identitäten über ein Netzwerk, wie beispielsweise ein Intranet oder das Internet, bereitgestellt werden können. Dies kann beispielsweise von Vorteil sein, wenn mit dem mobilen Endgerät ein Dienst über das Netzwerk in Anspruch genommen werden soll, für dessen Bereitstellung ein oder mehrere Identitätsattribute benötigt werden.

Nach Ausführungsformen handelt es sich bei dem auslesenden Computersystem um ein lokales Computersystem, welches mit dem mobilen Endgerät über eine kontaktlose Funkverbindung zwischen einer Kommunikationsschnittstelle des lokalen Computersystems und Kommunikationsschnittstelle des mobilen Endgeräts kommuniziert.

Ausführungsformen können den Vorteil haben, dass ein lokales Auslesen von Identitätsattributen durch ein lokales Computersystem, d.h. ein Terminal, ermöglicht werden kann. Somit können beispielsweise vor Ort Identitätsattribute bereitgestellt werden, falls diese etwa für ein Bereitstellen eines Dienstes vor Ort benötigt werden.

Ausführungsformen umfassen ferner ein mobiles Endgerät, welches einen Prozessor, einen Speicher und eine Kommunikationsschnittstelle umfasst. Auf dem mobilen Endgerät ist eine Mehrzahl elektronischer Identitäten gespeichert. Der Prozessor ist dazu konfiguriert ein Verfahren zum Freigeben von ein oder mehreren Identitätsattributen ein oder mehrerer der auf dem mobilen Endgerät gespeicherten elektronischen Identitäten für ein auslesendes Computersystem auszuführen. Das Freigeben der Identitätsattribute setzt ein erfolgreiches Authentifizieren des auslesenden Computersystems voraus. Das Authentifizieren des auslesenden Computersystems umfasst:

- Empfangen einer Leseanfrage des auslesenden Computersystems zum Auslesen ein oder mehrere Identitätsattribute ein oder mehrerer auszulesender Typen von elektronischen Identitäten zusammen mit einem Lesezertifikat des auslesenden Computersystems, wobei das Lesezertifikat Leserechte des auslesenden Computersystems auf Identitätsattribute einer Mehrzahl verschiedener Typen elektronischer Identitäten definiert,
- Zentrales Ausführen des Authentifizierens des auslesenden Computersystems, wobei das Authentifizieren ein Validieren einer Signatur des Lesezertifikats unter Verwendung eines auf dem mobilen Endgerät hinterlegten Root-Zertifikats umfasst,
- auf ein erfolgreiches Authentifizieren des auslesenden Computersystems hin, Bestimmen einer Gruppe von ein oder mehreren elektronischen Identitäten mit denjenigen auf dem mobilen Endgerät gespeicherten elektronischen Identitäten, die zu einem der Typen von elektronischen Identitäten gehören, für welche das Lesezertifikat Leserechte definiert,
- Identifizieren von ein oder mehreren elektronischen Identitäten innerhalb der bestimmten Gruppe von elektronischen Identitäten, die zu einem der auszulesenden Typen von elektronischen Identitäten gemäß Leseanfrage gehören,
- Senden von Authentifizierungsbestätigungen an ein oder mehrere auf dem mobilen Endgerät installierte Applikationen, welche jeweils ein oder mehrere der identifizierten elektronischen Identitäten verwalten, wodurch Leserechte des auslesenden Computersystems auf die entsprechenden elektronischen Identitäten bestätigt werden.

Nach Ausführungsformen ist das mobile Endgerät dazu konfiguriert jede der zuvor beschriebenen Ausführungsformen des Verfahrens zum Freigeben von ein oder mehreren Identitätsattributen auszuführen.

Im Weiteren werden Ausführungsformen der Erfindung mit Bezugnahme auf die Zeichnungen näher erläutert. Es zeigen:

Figur 1 ein schematisches Diagramm eines exemplarischen mobilen Endgeräts,

Figur 2 ein Flussdiagramm eines exemplarischen Verfahrens,

Figur 3 ein Flussdiagramm eines exemplarischen zentralen Authentisierens eines auslesenden Computersystems,

Figur 4 ein Flussdiagramm eines exemplarischen Authentifizierens eines Sicherheitsapplets,

Figur 5 ein schematisches Diagramm eines exemplarischen mobilen Endgeräts, und

Figur 6 ein schematisches Diagramm eines exemplarischen Systems.

Elemente der nachfolgenden Ausführungsformen, die einander entsprechen, werden mit denselben Bezugszeichen gekennzeichnet.

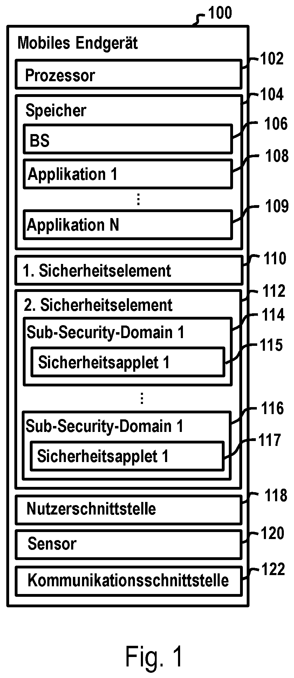

Figur 1 zeigt ein exemplarisches mobiles Endgerät 100, beispielsweise ein Smartphone, welches einen Speicher 104 mit Programminstruktionen umfasst, welche von einem Prozessor 102 ausgeführt werden. Die Programminstruktionen können beispielsweise ein auf dem mobiles Endgerät 100 installierten Betriebssystems 106 und ein oder mehrerer Applikationen bzw. Anwendungsprogramme 108 umfassen. Beispielsweise umfasst das mobile Endgerät 100 ein Sicherheitselement 110, welches dem Betriebssystem 106 zugeordnet ist und für dieses kryptographische Mittel bereitstellt, wie beispielsweise kryptographische Schlüssel, kryptographische Funktionen und/oder kryptographische Protokolle. Das Sicherheitselement 110 des Betriebssystems 106 stellt beispielsweise einen Key Store bzw. Schlüsselspeicher zum Speichern von kryptographischen Schlüsseln bereit, wie etwa symmetrische, öffentliche und/oder private kryptographischer Schlüssel, und von Zertifikaten, wie beispielsweise Lesezertifikate, Public-Key-Zertifikate und/oder Attributzertifikate. Die von dem ersten Sicherheitselement 110 bereitgestellten kryptographischen Mittel versetzten das Betriebssystem 106 beispielsweise dazu in die Lage, Daten zu verschlüsseln und/oder zu entschlüsseln, sowie Signaturen zu erstellen und/oder zu prüfen. Beispielsweise versetzen die von dem ersten Sicherheitselement 110 bereitgestellten kryptographischen Mittel das Betriebssystem 106 dazu in die Lage, ein Challenge Response-Verfahrens auszuführen bzw. an diesem teilzunehmen.

Beispielsweise umfasst das mobile Endgerät 100 ferner ein Sicherheitselement 112, welches ein oder mehrere Sub-Security-Domains 114, 116 umfasst. Jeder dieser Sub-Security-Domains 114, 116 ist beispielsweise einer auf dem mobilen Endgerät 100 gespeicherten elektronischen Identität zugeordnet. Beispielsweise werden ein oder mehrere der elektronischen Identität jeweils von einer der Applikationen 108, 109 verwaltet. Beispielsweise kann eine der Applikationen 108, 109 auch eine Mehrzahl von elektronischen Identitäten verwalten. Jede Sub-Security-Domains 114, 116 umfasst beispielsweise ein individuelles Applet bzw. Sicherheitsapplet 115, 117, welches der elektronischen Identitäten der entsprechenden Sub-Security-Domains 114, 116 zugeordnet ist. Die Applets 115, 117 ermöglichen es den Applikationen 108, 109 jeweils für die von ihnen verwalteten elektronischen Identitäten identitätsindividuelle kryptographische Mittel zur Verfügung zu stellen. Die entsprechenden identitätsindividuellen kryptographischen Mittel stellen die Applets 115, 117 jeweils für die die jeweilige elektronische Identität verwaltende Applikation bereit. Beispielsweise umfassen die identitätsindividuellen kryptographischen Mittel kryptographische Schlüssel, kryptographische Funktionen und/oder kryptographische Protokolle.

Die Applets 115, 117 bzw. den entsprechenden Applets 115, 117 zugeordnete Speicherbereiche des Sicherheitselements 112 stellen beispielsweise jeweils einen Key Store bzw. Schlüsselspeicher zum Speichern von kryptographischen Schlüsseln für die individuellen elektronischen Identitäten bereit, wie etwa symmetrische, öffentliche und/oder private kryptographische Schlüssel, und von Zertifikaten, wie beispielsweise Lesezertifikate, Public-Key-Zertifikate und/oder Attributzertifikate. Die von der Sub-Security-Domain 114, 116 des Sicherheitselements 112 bereitgestellten kryptographischen Mittel versetzten die Applikationen 108, 109 beispielsweise jeweils dazu in die Lage, Daten für die von ihnen verwalteten elektronischen Identitäten zu verschlüsseln und/oder zu entschlüsseln, sowie Signaturen zu erstellen und/oder zu prüfen. Beispielsweise versetzen die von der Sub-Security-Domain 114, 116 des Sicherheitselements 112 bereitgestellten kryptographischen Mittel die Applikationen 108, 109 dazu in die Lage, für die von ihnen verwalteten elektronischen Identitäten jeweils ein Challenge Response-Verfahrens auszuführen bzw. an diesem teilzunehmen. Die Sicherheitselemente 110, 112 können beispielsweise jeweils als eSim und/oder eUICC implementiert sein.

Ferner umfasst das mobile Endgerät 100 eine Nutzerschnittstelle 118, welche beispielsweise ein Display, insbesondere ein Touchscreen, umfasst. Unter Verwendung des Nutzerschnittstelle 118, kann der Nutzer mit dem mobiles Endgerät 100 interagieren. Beispielsweise kann der Nutzer zum Bereitstellen von Authentifizierungsdaten bzw. Authentifizierungsmerkmalen aufgefordert werden. Zum Erfassen von Authentifizierungsdaten des Nutzers umfasst das mobile Endgerät 100 einen Sensor bzw. Authentifizierungssensor 120, welcher beispielsweise in die Nutzerschnittstelle 118 integriert oder als eigenständige Komponente implementiert sein kann. Die Authentifizierungsdaten können beispielsweise biometrische Daten des Nutzers umfassen, wie beispielsweise: Fingerabdruckdaten, Körpergeometriedaten/Anthropometriedaten, wie etwa Gesichts-, Hand-, Ohrgeometriedaten, Handlinienstrukturdaten, Venenstrukturdaten, wie etwa Handvenenstrukturdaten, Irisdaten, Retinadaten, Stimmerkennungsdaten, Nagelbettmuster. Die Authentifizierungsdaten können beispielsweise ein Wissen des Nutzers umfassen, wie eine PIN oder Passwort. Ferner können die Authentifizierungsdaten beispielsweise Verhaltensmerkmale bzw. Verhaltensdaten des Nutzers umfassen, wie beispielsweise Bewegungsdaten des mobile Endgerät 100, welche durch von grob- und/oder feinmotorische Bewegungen des Nutzers verursacht werden, wenn dieser das des mobile Endgerät 100 bei sich trägt und/oder nutzt. Ein entsprechendes Authentifizieren des Nutzers kann beispielsweise Voraussetzung für ein Freigeben von Identitätsattributen der elektronischen Identitäten zum Auslesen durch ein auslesendes Computersystem sein. Durch eine entsprechende Nutzerauthentifizierung kann zum einen sichergestellt werden, dass das mobile Endgerät 100 von einem berechtigten Nutzer genutzt wird. Zum andern kann das Bereitstellen von Authentifizierungsdaten durch den Nutzer ein Einverständnis des Nutzers zum Auslesen der Identitätsattributen der elektronischen Identitäten durch das auslesende Computersystem darstellen. Schließlich umfasst das mobile Endgerät 100 eine Kommunikationsschnittstelle 122, etwa eine Antenne, welche konfiguriert ist für eine kontaktlose oder kontaktbehaftete Kommunikation etwa mit dem auslesenden Computersystem. Beispielsweise kann die Kommunikation mit dem auslesenden Computersystem über ein Netzwerk, wie etwa ein Intranet oder das Internet, erfolgen.

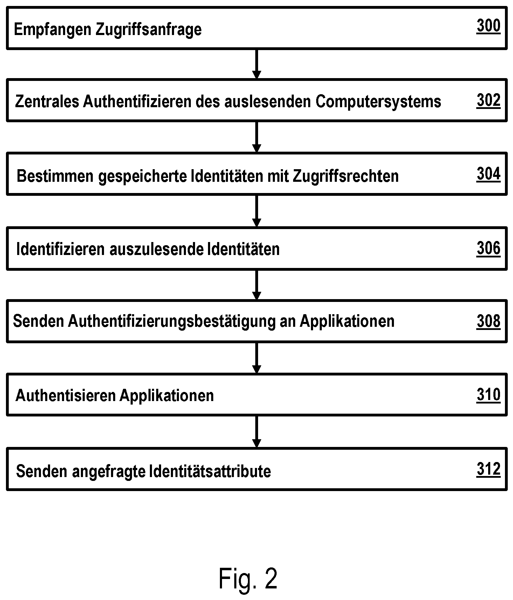

Figur 2 zeigt ein exemplarisches Verfahren zum Freigeben ein oder mehrerer Identitätsattribute ein oder mehrerer auf einem mobilen Endgerät gespeicherten elektronischen Identitäten für ein auslesendes Computersystem. Auf dem mobilen Endgerät ist eine Mehrzahl elektronischer Identitäten gespeichert ist. Voraussetzung für das Freigeben der Identitätsattribute ist ein erfolgreiches Authentifizieren des auslesenden Computersystems. In Block 300 empfängt das mobile Endgerät eine Leseanfrage des auslesenden Computersystems zum Auslesen ein oder mehrere Identitätsattribute ein oder mehrerer auszulesender Typen von elektronischen Identitäten zusammen mit einem Lesezertifikat des auslesenden Computersystems. Das Lesezertifikat definiert Leserechte des auslesenden Computersystems auf Identitätsattribute einer Mehrzahl verschiedener Typen elektronischer Identitäten definiert. In Block 302 erfolgt ein zentrales Authentifizieren des auslesenden Computersystems. Dieses Authentifizieren umfasst ein Validieren einer Signatur des Lesezertifikats unter Verwendung eines auf dem mobilen Endgerät hinterlegten Root-Zertifikats.

Das zentrale Authentifizieren des auslesenden Computersystems wird beispielsweise durch ein Betriebssystem des mobilen Endgeräts ausgeführt. Das Betriebssystem hat beispielsweise Zugriff auf ein Sicherheitselement des mobilen Endgeräts, in welchem das Root-Zertifikat zum Validieren des Lesezertifikats gespeichert ist. Beispielsweise erfolgt das zentrale Authentifizieren des auslesenden Computersystems durch eine auf dem mobilen Endgerät installierte Applikation. Die authentifizierende Applikation besitzt beispielsweise keinen Zugriff auf ein Sicherheitselement des mobilen Endgeräts. In diesem Fall umfasst beispielsweise die Applikation das Root-Zertifikat zum Validieren des Lesezertifikats. Ferner ist die gesamte Applikation oder zumindest ein das Root-Zertifikat umfassender Teil der Applikation signiert. Eine Voraussetzung zum Ausführen der zentralen Authentifizierung durch die entsprechende Applikation ist beispielsweise eine erfolgreiche Integritätsprüfung des Root-Zertifikats. Diese kann beispielsweise in Form einer Prüfung der entsprechenden Signatur erfolgen. Beispielsweise kann die authentifizierende Applikation Zugriff auf ein Sicherheitselement des mobilen Endgeräts besitzen. Der Applikation kann beispielsweise ein Applet zugeordnet sein, welches in einer der Applikation zugeordneten Sub-Security-Domain des entsprechenden Sicherheitselements des mobilen Endgeräts installiert ist. Die Applikation kann das Applet im Zuge des Authentifizierens des auslesenden Computersystems verwenden. Beispielsweise ist das Root-Zertifikat zum Validieren des Lesezertifikats in der Sub-Security-Domain des entsprechenden Sicherheitselements gespeichert.

Beispielsweise umfasst das Lesezertifikat einen öffentlichen kryptographischen Schlüssel eines asymmetrischen Schlüsselpaars des auslesenden Computersystems. Dieser öffentliche kryptographische Schlüssel des auslesenden Computersystems wird im Zuge des zentralen Authentifizierens aus dem Lesezertifikat extrahiert. Es wird eine zufällige Challenge, etwa in Form einer Zufallszahl erzeugt. Diese zufällige Challenge wird an das auslesende Computersystem gesendet und als Antwort auf die Challenge wird eine Response des auslesenden Computersystems empfangen. Diese Response umfasst beispielsweise eine Signatur der zuvor gesendeten Challenge, welche von dem auslesenden Computersystem unter Verwendung eines zu dem extrahierten öffentlichen kryptographischen Schlüssel gehörenden privaten kryptographischen Schlüssels des asymmetrischen Schlüsselpaars des auslesenden Computersystems als Signaturschlüssel erstellt wurde. Das mobile Endgerät validiert die als Response bereitgestellte Signatur der Challenge unter Verwendung der zuvor gesendeten Challenge als Referenzwert und des extrahierten öffentlichen kryptographischen Schlüssels als Signaturprüfschlüssel. Beispielsweise entschlüsselt das mobile Endgerät die Response bzw. die signierte Challenge unter Verwendung des extrahierten öffentlichen kryptographischen Schlüssels und vergleicht das Ergebnis mit einem Hashwert der zuvor gesendeten Challenge.

In Block 304 bestimmt das mobile Endgerät bzw. das die zentrale Authentifizierung ausführende Element des mobilen Endgeräts eine Gruppe von elektronischen Identitäten, welche diejenigen auf dem mobilen Endgerät gespeicherten elektronischen Identitäten umfasst, die zu einem der Typen von elektronischen Identitäten gehören, für welche das Lesezertifikat Leserechte definiert. Diese Gruppe umfasst also beispielsweise alle elektronischen Identitäten des mobilen Endgeräts, für welche das Auslesende Computersystem Leserechte besitzt. In Block 306 werden innerhalb der in Block 304 bestimmten Gruppe diejenigen elektronischen Identitäten identifiziert, die zu einem der auszulesenden Typen von elektronischen Identitäten gemäß Leseanfrage gehören. Somit können beispielsweise alle elektronischen Identitäten des mobilen Endgeräts identifiziert werden, welche ausgelesen werden sollen und für welche das auslesende Computersystem zugleich ein Leserecht besitzt bzw. Nachweisen kann. In Block 308 sendet das die zentrale Authentifizierung des auslesenden Computersystems ausführende Element des mobilen Endgeräts auf eine erfolgreiche Authentifizierung hin eine Authentifizierungsbestätigungen an all diejenigen Applikationen des mobilen Endgeräts, welche eine identifizierte elektronische Identität verwalten. Hierdurch werden die Leserechte des auslesenden Computersystems auf die entsprechenden elektronischen Identitäten gegenüber den entsprechenden Applikationen bzw. den entsprechenden Applikationen oder den von den entsprechenden Applikationen verwalteten elektronischen Identitäten bestätigt. Im Falle einer zentralen Authentifizierung durch ein Element, wie etwa das Betriebssystem oder eine Applikation, welches einen Zugriff auf ein Sicherheitselement besitzt, werden die Authentifizierungsbestätigungen von dem authentifizierenden Element beispielsweise signiert. Ein entsprechender Signaturschlüssel, z.B. ein privater kryptographischer Schlüssel, wird dem authentifizierenden Element beispielsweise von dem entsprechenden Sicherheitselement zur Verfügung gestellt.

In Block 310 führen die Applikationen, welche die Authentifizierungsbestätigungen der zentralen Authentifizierung empfangen, beispielsweise für jede der identifizierten elektronischen Identitäten jeweils eine Authentisierung der entsprechenden elektronischen Identität unter Verwendung einer Sub-Security-Domain der entsprechenden elektronischen Identität auf einem Sicherheitselement des mobilen Endgeräts aus. Im Zuge des Authentifizierens wird beispielsweise ein öffentlicher kryptographischer Schlüssel eines der Applikation bzw. der elektronischen Identität zugeordneten asymmetrischen Schlüsselpaars an das auslesende Computersystem gesendet. Ein privater kryptographischen Schlüssel des asymmetrischen Schlüsselpaars ist in der der Applikation bzw. der elektronischen Identität zugeordneten Sub-Security-Domain gespeichert ist. Unter Verwendung eines in der Sub-Security-Domain installierten Applets wird eine mit dem auslesenden Computersystem geteiltes Geheimnis unter Verwendung des privaten kryptographischen Schlüssels der Applikation bzw. der elektronischen Identität und einem von dem auslesenden Computersystem empfangenen ephemeren öffentlichen kryptographischen Schlüssel berechnet. Eine erste Kopie des entsprechenden ephemeren öffentlichen kryptographischen Schlüssels wurde beispielsweise bereits im Zuge der zentralen Authentifizierung des auslesenden Computersystems durch das authentifizierende Element des mobilen Endgeräts von dem auslesenden Computersystem empfangen. Beispielsweise empfängt die das Applet verwendende Applikation in Antwort auf das Senden des der Applikation zugeordneten öffentlichen kryptographischen Schlüssels von dem auslesenden Computersystem eine zweite Kopie des ephemeren öffentlichen kryptographischen Schlüssels. Diese beiden Kopien werden miteinander verglichen. Für das Erzeugen des geteilten Geheimnisses ist beispielsweise eine Übereinstimmung zwischen beiden Kopien notwendig.

Durch Empfang des öffentlichen kryptographischen Schlüssels des der Applikation bzw. der elektronischen Identität zugeordneten asymmetrischen Schlüsselpaars wird das auslesende Computersystem ebenfalls in die Lage versetzt, das geteilte Geheimnis zu berechnen. Hierzu verwendet das auslesende Computersystem beispielsweise den entsprechenden öffentlichen kryptographischen Schlüssel und einen zu dem ephemeren öffentlichen Schlüssel gehörenden ephemeren privaten kryptographischen Schlüssel des auslesenden Computersystems.

Ferner erzeugt das Applet beispielsweise eine Zufallszahl. Diese Zufallszahl wird zusammen mit dem geteilten Geheimnis beispielsweise zum Berechnen eines Authentisierungsschlüssels, etwa eines Schlüssels zum Erzeugen eines Message Authentication Codes, zum Sichern der Authentizität von Daten, welche im Zuge eine Kommunikation zwischen der das Applet verwendenden Applikation und dem auslesenden Computersystem ausgetauscht werden. Ferner wird das geteilte Geheimnis beispielsweise zum Berechnen eines symmetrischen kryptographischen Schlüssels verwendet, welcher zum Verschlüsseln der Daten verwendet werden kann, die im Zuge eine Kommunikation zwischen der das Applet verwendenden Applikation und dem auslesenden Computersystem ausgetauscht werden. Insbesondere können der Authentisierungsschlüssel und der symmetrischen kryptographischen Schlüssel zum kryptographischen Sichern der auszulesenden Identitätsattribute verwendet werden.

Das Applet erzeugt ferner einen Authentisierungstoken unter Verwendung des Authentisierungsschlüssels und des ephemeren zweiten öffentlichen kryptographischen Schlüssels des auslesenden Computersystems. Dieser Authentisierungstoken wird zusammen mit der Zufallszahl an das auslesende Computersystem gesendet. Das auslesende Computersystem kann die empfangene Zufallszahl verwenden, um ebenfalls den Authentisierungsschlüssel und den symmetrischen kryptographischen Schlüssel zu berechnen. Unter Verwendung des so berechneten Authentisierungsschlüssels und des ephemeren zweiten öffentlichen kryptographischen Schlüssels kann das auslesende Computersystem den empfangenen Authentisierungstoken validieren. Beispielsweise kann das auslesende Computersystem den Authentisierungstoken selbst berechnen und das Ergebnis mit dem empfangen Authentisierungstoken vergleichen. Bei einer Übereinstimmung gelten der Authentisierungstoken und die Zufallszahl als validiert.

In Block 312 schließlich können die einzelnen Applikationen, welche elektronische Identitäten verwalten, von denen Identitätsattribute angefragt wurden, die angefragten Identitätsattribute unter Verwendung des jeweiligen Authentisierungsschlüssels und des symmetrischen kryptographischen Schlüssels für die entsprechende elektronische Identität kryptographisch absichern, d.h. einen MAC-Code berechnen und verschlüsseln. Die entsprechenden, beispielsweise identitätsspezifischen, Authentisierungsschlüssel und symmetrischen kryptographischen Schlüssel werden jeweils von dem der entsprechenden elektronischen Identität zugeordneten Applet bereitgestellt. Die so kryptographisch abgesicherten Identitätsattribute werden an das auslesende Computersystem gesendet, welches die gesendeten Identitätsattribute unter Verwendung der ebenfalls berechneten, beispielsweise identitätsspezifischen, Authentisierungsschlüssel und symmetrischen kryptographischen Schlüssel valideren kann. Unter Verwendung der symmetrischen kryptographischen Schlüssel können die Identitätsattribute entschlüsselt und unter Verwendung der Authentisierungsschlüssel auf ihre Authentizität überprüft werden.

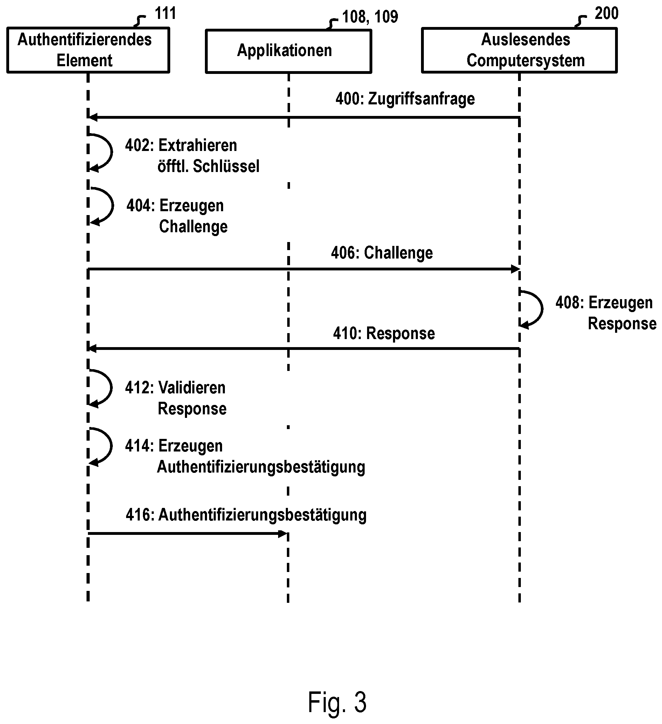

Figur 3 zeigt ein exemplarisches Verfahren zum zentralen Authentifizieren eines auslesenden Computersystems 200 durch ein authentifizierendes Element 111 eines mobilen Endgeräts. Bei dem authentifizierenden Element 111 kann es sich beispielsweise um das Betriebssystem des mobilen Endgeräts handeln, welches Zugriff auf ein Sicherheitselement besitzt, oder um eine Applikation des mobilen Endgeräts, welche Zugriff auf ein Sicherheitselement besitzt. Alternativ kann es sich bei dem authentifizierenden Element 111 beispielsweise auch um eine Applikation des mobilen Endgeräts handeln, welche keinen Zugriff auf ein Sicherheitselement besitzt. In Schritt 400 wird die Leseanfrage des auslesenden Computersystems 200 mit einem Lesezertifikat empfangen. In Schritt 402 wird aus dem Lesezertifikat ein öffentlicher kryptographischer Schlüssel des auslesenden Computersystems 200 extrahiert. Die Validität des öffentlichen kryptographischen Schlüssels wird durch die Validität des Lesezertifikats belegt, welche unter Verwendung eines Root-Zertifikats geprüft werden kann. In Schritt 404 wird eine Challenge für das auslesende Computersystem 200 erzeugt, bei welcher es sich beispielsweise um eine Zufallszahl handelt. In Schritt 406 wird die Challenge an das auslesende Computersystem 200 gesendet, welches unter Verwendung der Challenge in Schritt 408 eine Response erzeugt. Beispielsweise erzeugt das auslesende Computersystem 200 eine Signatur der empfangenen Challenge mit einem privaten kryptographischen Schlüssel. In die Signatur können beispielsweise weitere Größen eingehen, wie etwa eine von dem authentifizierenden Element 111 gesendete zusätzliche Zufallszahl. In Schritt 410 empfängt das authentifizierenden Element 111 die Response von dem auslesenden Computersystem 200. In Schritt 412 validiert das authentifizierenden Element 111 die Response. Beispielsweise wird die Signatur mit dem in Schritt 402 extrahierten kryptographischen Schlüssel als Signaturprüfschlüssel geprüft. Falls weitere Größen in die Signatur eingegangen sind, wie etwa eine zusätzliche Zufallszahl, werden diese ebenfalls herangezogen. Ist die Signaturprüfung erfolgreich, gilt das auslesende Computersystem 200 als authentifiziert. In Schritt 414 erzeugt die authentifizierenden Element 111 Authentifizierungsbestätigungen für alle Applikationen 108, 109 des mobilen Endgeräts, welche jeweils eine elektronische Identität verwalten, von der Identitätsattribute angefragt sind und für welche das auslesende Computersystem 200 ein Leserecht besitzt. In Schritt 416 werden die Authentifizierungsbestätigungen an die entsprechenden Applikationen 108, 109 gesendet.

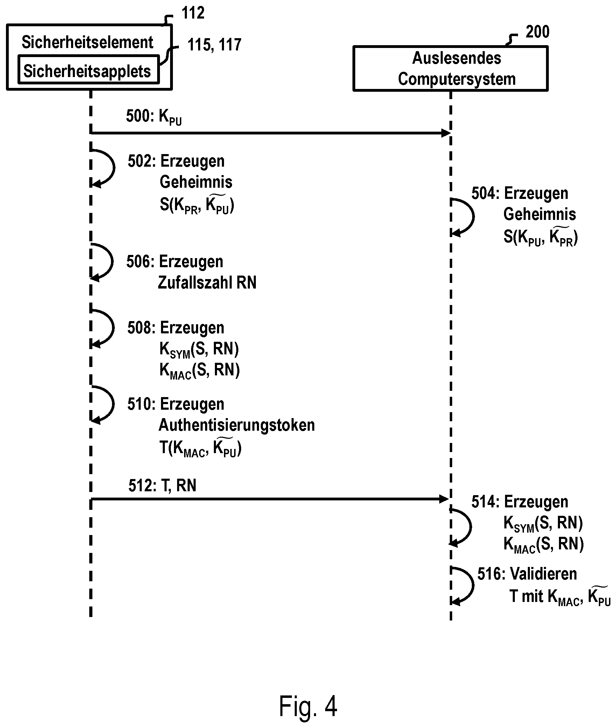

Figur 4 zeigt ein Verfahren zum Authentisieren von Applikationen des mobilen Endgeräts, welche eine elektronische Identität verwalten, von der Identitätsattribute angefragt sind, bzw. der entsprechenden elektronische Identität. Eine entsprechende Authentisierung erfolgt beispielsweise für jede Applikation 108, 109 bzw. jede elektronische Identität des mobilen Endgeräts, von der Identitätsattribute angefragt sind. In Schritt 500 sendet das Applet 115, 117 oder die dem Applet 115, 117 zugeordnete Applikation einen öffentlichen kryptographischen Schlüssels $K_{PU}$ eines der Applikation bzw. eines der von der Applikation verwalteten elektronischen Identität zugeordneten asymmetrischen Schlüsselpaars an das auslesende Computersystem 200. In Schritt 502 berechnet das Applet 115, 117 ein mit dem auslesenden Computersystem 200 geteilten Geheimnisses S unter Verwendung des privaten kryptographischen Schlüssels $K_{PR}$ der Applikation bzw. der von der Applikation verwalteten elektronischen Identität und einem von dem auslesenden Computersystem 200 empfangenen ephemeren öffentlichen kryptographischen Schlüssel $\widetilde{K_{PU}}$ des auslesenden Computersystems 200. Der entsprechende öffentlichen kryptographischen Schlüssel $\widetilde{K_{PU}}$

des auslesenden Computersystems 200 wird beispielsweise im Zuge des Authentifizierens des auslesenden Computersystems 200 empfangen. Beispielsweise wird die im Zuge des Authentifizierens empfangene Kopie des ephemeren öffentlichen kryptographischen Schlüssels $\widetilde{K_{PU}}$ an das Applet weitergeleitet. Beispielsweise wird im Zuge des Authentisierens der Applikationen 115, 117 bzw. der von diesen verwalteten elektronischen Identitäten eine zweite Kopie des ephemeren öffentlichen kryptographischen Schlüssels $\widetilde{K_{PU}}$ empfangen, welche mit der im Zuge des Authentifizierens des auslesenden Computersystems 200 empfangen Kopie des ephemeren öffentlichen kryptographischen Schlüssels $\widetilde{K_{PU}}$ verglichen wird. In Schritt 504 berechnet das auslesende Computersystem 200 ebenfalls das geteilte Geheimnis S. Hierzu verwendet das auslesende Computersystem 200 beispielsweise den in Schritt 500 gesendeten öffentlichen kryptographischen Schlüssels $K_{PU}$ sowie den zu dem ephemeren öffentlichen kryptographischen Schlüssel $\widetilde{K_{PU}}$ gehörenden ephemeren privaten kryptographischen Schlüssel $\widetilde{K_{PR}}$. In Schritt 506 erzeugt das Applet 115, 117 eine Zufallszahl RN. In Schritt 508 erzeugt das Applet 115, 117 einen Authentisierungsschlüssel $K_{MAC}$, z.B. einen Schlüssel zum Erzeugen eines MAC-Codes, sowie einen symmetrischen kryptographischen Schlüssel $K_{SYM}$. Die Schlüssel $K_{SYM}$ und $K_{MAC}$ dienen beispielsweise dazu von der Applikation bzw. dem Applet 115, 117 an das auslesende Computersystem gesendete Daten, wie etwa Identitätsattribute, zu verschlüsseln und deren Authentizität nachzuweisen, etwa unter Verwendung eines MAC-Codes. In Schritt 510 erzeugt das Applet 115, 117 einen Authentisierungstoken T unter Verwendung des Authentisierungsschlüssels $K_{MAC}$ und des ephemeren öffentlichen kryptographischen Schlüssels $\widetilde{K_{PU}}$. In Schritt 512 wird der Authentisierungstoken T zusammen mit der in Schritt 506 erzeugten Zufallszahl RN an das auslesende Computersystem 200 gesendet. In Schritt 514 verwendet das auslesende Computersystem 200 die empfangene Zufallszahl RN zusammen mit dem in Schritt 504 berechneten geteilten Geheimnis S zum Berechnen des Authentisierungsschlüssels $K_{MAC}$, z.B. eines Schlüssels zum Erzeugen eines MAC-Codes, sowie des symmetrischen kryptographischen Schlüssels $K_{SYM}$. In Schritt 516 wird schließlich der empfangene Authentisierungstoken T von dem auslesenden Computersystem 200 unter Verwendung des Schlüssels $K_{MAC}$ und des ephemeren öffentlichen kryptographischen Schlüssels $\widetilde{K_{PU}}$ validiert. Beispielsweise berechnet das auslesende Computersystem 200 ebenfalls den Authentisierungstoken T und vergleicht das Ergebnis mit dem empfangenen Authentisierungstoken T. Falls beide übereinstimmen ist die Applikation bzw. die von ihr verwaltete elektronische Identität erfolgreich authentisiert.

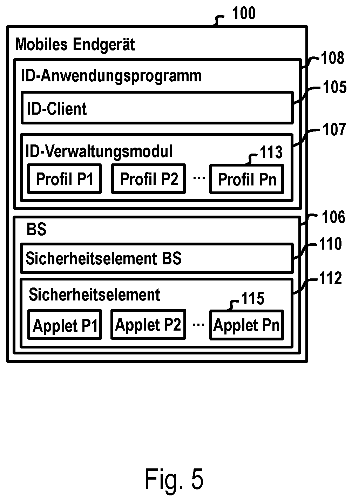

Figur 5 zeigt ein exemplarisches mobiles Endgerät 100, auf welchem ein oder mehrere Anwendungsprogramms 108 gespeichert sind, bei denen es sich beispielsweise um ein ID-Anwendungsprogramme handelt. Ein ID-Anwendungsprogramm 108 verwaltet beispielsweise ein oder mehrere dem Nutzer zugeordnete elektronische Identitäten mit Identitätsattributen. Hierzu umfasst es beispielsweise ein ID-Verwaltungsmodul 107 mit ein oder mehreren Identitäten bzw. ID-Profilen 113. Jeder der elektronischen Identitäten 113 ist beispielsweise jeweils ein unabhängiges Sicherheitsapplet 114 in einem Sicherheitselement 112 des mobilen Endgeräts 100 zugeordnet. Jeder der elektronischen Identitäten 113 ist jeweils ein Satz von ein oder mehreren Identitätsattributen zugeordnet. Diese Identitätsattribute sind beispielsweise jeweils in einer Sub-Security-Domain, d.h. einem Speicherbereich des Sicherheitselements 112 gespeichert, welcher dem entsprechend Sicherheitsapplet 115 zugeordnet ist, und/oder verschlüsselt in einem Speicher des mobilen Endgeräts 100 gespeichert. Die kryptographischen Schlüssel zum Entschlüsseln der verschlüsselten Identitätsattribute sind in diesem Fall beispielswese jeweils in den entsprechenden Sicherheitsapplets 115 gespeichert sind. Das ID-Anwendungsprogramm 108 umfasst ferner beispielsweise ein ID-Clientmodul 105, über welches das ID-Anwendungsprogramm 108 beispielsweise Anfragen nach Identitätsattributen eines der ID-Profile 113 von einem auslesenden Computersystem empfangen kann. In Antwort auf die Anfrage, beispielsweise durch einen ID-Provider-Service über ein Netzwerk, kann das ID-Anwendungsprogramm 108 nach einer erfolgreichen zentralen Authentifizierung des auslesenden Computersystems die angefragten Identitätsattribute unter der Voraussetzung einer Zustimmung des Nutzers zur Verfügung stellen. Hierfür kann eine Nutzerauthentifizierung gegenüber dem ID-Anwendungsprogramm 108 notwendig sein bzw. kann ein Nachweis einer erfolgreichen Nutzerauthentifizierung durch das ID-Anwendungsprogramm 108 mittels eines Challenge-Response-Verfahrens notwendig sein. Hierzu wird ein dem Betriebssystem 106 zugeordnetes Sicherheitselement 110 verwendet. Dieses führt beispielsweise eine Nutzerauthentifizierung mit einem Authentifizierungssensor des mobilen Endgeräts 100 aus und bestätigt dem Sicherheitselement 112 die erfolgreiche Nutzerauthentifizierung. Diese gilt beispielsweise zugleich als Zustimmung des Nutzers zu einem Auslesen der angefragten Identitätsattribute. Beispielsweise kann der Nutzer die Möglichkeit haben über eine Nutzerschnittstelle die Auswahl der zum Auslesen zur Verfügung gestellten Identitätsattribute zu beeinflussen, z.B. zu ändern.

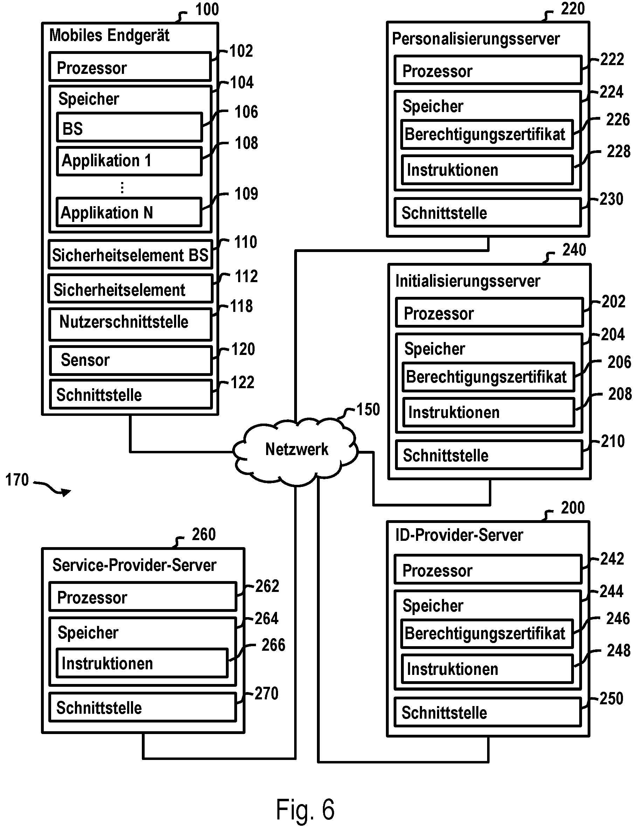

Figur 6 zeigt ein exemplarisches System 170, welches beispielsweise ein mobiles Endgerät 100 umfasst, das über ein Netzwerk 150, beispielsweise das Internet, mit einem Initialisierungsserver 240, einem Personalisierungsserver 220, einem ID-Provider-Server 200 und/oder einem Service-Provider-Server 260 verbunden ist. Der Initialisierungsserver 240 umfasst einen Prozessor 202, einen Speicher 204 und eine Kommunikationsschnittstelle 210. In dem Speicher 204 sind Programminstruktionen 208 gespeichert, bei deren Ausführung der Prozessor 202 den Initialisierungsserver 240 zum Initialisieren eines Applets in dem Sicherheitselement 112 des mobile Endgeräts 100 steuert. Das Applet ist beispielsweise einer Applikation 108, 109 des mobilen Endgeräts 100 bzw. einer von der entsprechenden Applikation verwaltenden elektronischen Identität zugeordnet. Zum Nachweis einer Schreibberechtigung zum Installieren des Applets verwendet der Initialisierungsserver 240 beispielsweise das Schreibzertifikat 206.

Der Personalisierungsserver 220 umfasst beispielsweise einen Prozessor 222, einen Speicher 224 und eine Kommunikationsschnittstelle 230. In dem Speicher 224 sind Programminstruktionen 228 gespeichert, bei deren Ausführung der Prozessor 222 den Personalisierungsserver 220 zum Bereitstellen eines symmetrischen Schlüssels für ein Challenge-Response-Verfahren zwischen den Sicherheitselementen 110, 112 des mobile Endgerät 100 steuert. Somit kann das initialisierte Applet an das eine Nutzerauthentifizierung unter Verwendung des Sensors 120 ausführende Sicherheitselement 110 und damit an den Nutzer des mobilen Endgeräts 100 gekoppelt werden. Zum Nachweis einer Schreibberechtigung zum Schreiben des symmetrischen Schlüssels in einen dem Applet zugeordneten Speicherbereich des Sicherheitselements 112 des mobile Endgeräts 100, d.h. die Sub-Security-Domain des Applets, verwendet der Personalisierungsserver 220 beispielsweise das Schreibzertifikat 226.

Der Service-Provider-Server 260 umfasst beispielsweise einen Prozessor 262, einen Speicher 264 und eine Kommunikationsschnittstelle 270. In dem Speicher 264 sind Programminstruktionen 268 gespeichert, bei deren Ausführung der Prozessor 262 den Service-Provider-Server 260 zum Bereitstellen von Dienstleistungen steuert, welche beispielsweise von dem mobilen Endgerät 100 über das Netzwerk 150 angefragt und/oder genutzt werden können. Eine Inanspruchnahme von Dienstleistungen des Service-Provider-Server 260 setzt beispielsweise ein Bereitstellen und/oder Nachweis eines oder mehrerer Identitätsattribute des Nutzers voraus. Auf eine Anfrage einer Dienstleistung des Service-Provider-Server 260 durch das mobile Endgerät 100 sendet der Service-Provider-Servers 260 eine Identitätsattributsanfrage zum Auslesen von Identitätsattributen des Nutzers des mobilen Endgeräts 100 an einen ID-Provider-Server 200. Die Identitätsattributsanfrage kann von dem Service-Provider-Servers 260 beispielsweise direkt oder über das mobile Endgerät 100 an den ID-Provider-Server 200 gesendet werden. Bei den auszulesenden Identitätsattributen handelt es sich beispielsweise um Identitätsattribute verschiedener auf dem mobilen Endgerät 100 gespeicherter elektronischer Identitäten.

Der ID-Provider-Server 200 umfasst beispielsweise einen Prozessor 242, einen Speicher 244 und eine Kommunikationsschnittstelle 250. In dem Speicher 244 sind Programminstruktionen 248 gespeichert, bei deren Ausführung der Prozessor 242 den Service-Provider-Server 260 zum Auslesen der in der Identitätsattributsanfrage spezifizierten Identitätsattribute aus einem Speicher des mobilen Endgeräts 100. Hierzu baut der ID-Provider-Server 200 einen kryptographisch gesicherten Kommunikationskanal mit dem mobilen Endgerät 100 auf. Bei dem kryptographisch gesicherten Kommunikationskanal kann es sich beispielsweise um einen Ende-zu-Ende-verschlüsselten Kommunikationskanal handeln. Beispielsweise setzt dies eine gegenseitiges Authentifizieren von dem ID-Provider-Server 200 als auslesendem Computersystem und den die elektronischen Identitäten verwaltenden Applikationen 108, 109 bzw. den entsprechenden elektronischen Identitäten voraus. Für einen Lesezugriff auf die auszulesenden Identitätsattribute verwendet der ID-Provider-Server 200 die Applikationen 108, 109 auf dem mobilen Endgerät 100, welches die elektronischen Identitäten mit den auszulesenden Identitätsattribute verwalten. Der ID-Provider-Server 200 als auslesendes Computersystem sendet eine entsprechende Leseanfrage an das mobile Endgerät 100. Eine Leseberechtigung zum Auslesen der in der Identitätsattributsanfrage spezifizierten Identitätsattribute weist der ID-Provider-Server 200 beispielsweise mit dem Lesezertifikat 246 nach. Das Lesezertifikat 246 sendet der ID-Provider-Server 200 beispielsweise zusammen mit der Leseanfrage. Das empfangene Lesezertifikat 246 wird von dem mobilen Endgerät 100 beispielsweise im Zuge einer zentralen Authentifizierung validiert. Ferner setzt ein Lesezugriff des ID-Provider-Server 200 auf die in der Identitätsattributsanfrage spezifizierten Identitätsattribute beispielsweise eine Zustimmung des Nutzers des mobilen Endgeräts 100 voraus. Hierzu muss sich der Nutzer gegenüber dem ID-Anwendungsprogramm 108 erfolgreich authentisieren. Das mobile Endgerät 100 authentifiziert den Nutzer beispielsweise unter Verwendung des Sensors 120 und des Sicherheitselements 110 des Betriebssystems 106. Das Sicherheitselements 110 bestätigt dem Sicherheitselement 112 bzw. von diesem umfassten Applets die erfolgreiche Authentifizierung des Nutzers. Dies kann beispielsweise unter Verwendung eines Challenge-Response-Verfahrens erfolgen. Beispielsweise wird dem Nutzer über eine Anzeigevorrichtung der Nutzerschnittstelle 118 angezeigt, welche Identitätsattribut an den ID-Provider-Server 200 gesendet werden sollen, und dem Nutzer ermöglicht diese Auswahl zu bearbeiten. Beispielsweise kann der Nutzer selektieren, welche der angefragten Identitätsattribute tatsächlich gesendet werden. Auf einen erfolgreichen Nachweis der Leseberechtigung bzw. Authentifizierung des ID-Provider-Server 200 und eine erfolgreiche Nutzerauthentifizierung werden dem ID-Provider-Server 200 die freigegebenen Identitätsattribute zugesendet. Der ID-Provider-Server 200 signiert beispielsweise die empfangenen Identitätsattribute und sendet diese an den Service-Provider-Server 260.

## Bezugszeichenliste

| | |
|---|---|
| 100 | mobiles Endgerät |
| 102 | Prozessor |
| 104 | Speicher |
| 105 | ID-Client |
| 106 | Betriebssystem |
| 107 | ID-Verwaltungsmodul |
| 108 | Applikation |
| 109 | Applikation |
| 110 | Sicherheitselement |
| 111 | authentifizierendes Element |
| 112 | Sicherheitselement |
| 113 | elektronische Identität |
| 114 | Sub-Security-Domain |
| 115 | Applet |
| 116 | Sub-Security-Domain |
| 117 | Applet |
| 118 | Nutzerschnittstelle |
| 120 | Authentifizierungssensor |
| 122 | Kommunikationsschnittstelle |
| 150 | Netzwerk |
| 170 | System |
| 200 | Initialisierungsserver |
| 202 | Prozessor |
| 204 | Speicher |
| 206 | Schreibzertifikat |
| 208 | Programminstruktionen |
| 210 | Kommunikationsschnittstelle |
| 220 | Personalisierungsserver |
| 222 | Prozessor |
| 224 | Speicher |
| 226 | Schreibzertifikat |
| 228 | Programminstruktionen |
| 230 | Kommunikationsschnittstelle |
| 240 | ID-Provider-Server |
| 242 | Prozessor |
| 244 | Speicher |
| 246 | Lesezertifikat |
| 248 | Programminstruktionen |
| 250 | Kommunikationsschnittstelle |
| 260 | Service-Provider-Server |
| 262 | Prozessor |
| 264 | Speicher |
| 266 | Programminstruktionen |
| 270 | Kommunikationsschnittstelle |

## Patentansprüche

1. Verfahren zum Freigeben von ein oder mehreren Identitätsattributen ein oder mehrerer auf einem mobilen Endgerät (100) gespeicherten elektronischen Identitäten (113) für ein auslesendes Computersystem (200), wobei auf dem mobilen Endgerät (100) eine Mehrzahl elektronischer Identitäten (113) gespeichert ist, wobei das Freigeben der Identitätsattribute ein erfolgreiches Authentifizieren des auslesenden Computersystems (200) voraussetzt, wobei das Authentifizieren des auslesenden Computersystems (200) umfasst:

• Empfangen einer Leseanfrage des auslesenden Computersystems (200) zum Auslesen ein oder mehrere Identitätsattribute ein oder mehrerer auszulesender Typen von elektronischen Identitäten zusammen mit einem Lesezertifikat (246) des auslesenden Computersystems (200), wobei das Lesezertifikat (246) Leserechte des auslesenden Computersystems (200) auf Identitätsattribute einer Mehrzahl verschiedener Typen elektronischer Identitäten definiert,

• Zentrales Ausführen des Authentifizierens des auslesenden Computersystems (200), wobei das Authentifizieren ein Validieren einer Signatur des Lesezertifikats (246) unter Verwendung eines auf dem mobilen Endgerät (100) hinterlegten Root-Zertifikats umfasst,

• auf ein erfolgreiches Authentifizieren des auslesenden Computersystems (200) hin, Bestimmen einer Gruppe von ein oder mehreren elektronischen Identitäten (113) mit denjenigen auf dem mobilen Endgerät (100) gespeicherten elektronischen Identitäten (113), die zu einem der Typen von elektronischen Identitäten gehören, für welche das Lesezertifikat (246) Leserechte definiert,

• Identifizieren von ein oder mehreren elektronischen Identitäten (113) innerhalb der bestimmten Gruppe von elektronischen Identitäten (113), die zu einem der auszulesenden Typen von elektronischen Identitäten gemäß Leseanfrage gehören,

• Senden von Authentifizierungsbestätigungen an ein oder mehrere auf dem mobilen Endgerät (100) installierte Applikationen (108, 109), welche jeweils ein oder mehrere der identifizierten elektronischen Identitäten (113) verwalten, wodurch Leserechte des auslesenden Computersystems (200) auf die entsprechenden elektronischen Identitäten (113) bestätigt werden.

2. Verfahren nach Anspruch 1, wobei die Authentifizierungsbestätigungen jeweils eine Angabe derjenigen Identitätsattribute der identifizierten elektronischen Identitäten (113) umfassen, welche die Applikation (108, 109) verwaltet, an welche die entsprechende Authentifizierungsbestätigung gesendet wird, und für welche das Lesezertifikat (246) Leserechte des auslesenden Computersystems (200) definiert.

3. Verfahren nach einem der vorangehenden Ansprüche, wobei das zentrale Authentifizieren des auslesenden Computersystems (200) mit dem Validieren des Lesezertifikats (246) durch ein auf dem mobilen Endgerät (100) installiertes Betriebssystem (106) ausgeführt wird.

4. Verfahren nach Anspruch 3, wobei das Authentifizieren durch das Betriebssystem (106) unter Verwendung eines Sicherheitselements (110) des Betriebssystems (106) erfolgt, in welchem das Root-Zertifikat zum Validieren des Lesezertifikats (246) gespeichert ist.

5. Verfahren nach Anspruch 4, wobei die Authentifizierungsbestätigungen mit einem dem Betriebssystem (106) zugeordneten privaten kryptographischen Schlüssel signiert werden, welcher in dem Sicherheitselements (110) des Betriebssystems (106) gespeichert ist.

6. Verfahren nach einem der Ansprüche 1 bis 2, wobei das zentrale Authentifizieren des auslesenden Computersystems (200) mit dem Validieren des Lesezertifikats (246) durch eine auf dem mobilen Endgerät (100) installierte Applikation (108, 109) erfolgt.

7. Verfahren nach Anspruch 6, wobei der Applikation (108, 109) Applet (115, 117) zugeordnet sind, welches in einer der Applikation (108, 109) zugeordneten Sub-Security-Domain (114, 116) eines Sicherheitselements (112) des mobilen Endgeräts (100) installiert ist, wobei das Authentifizieren unter Verwendung des Applets (115, 117) erfolgt, wobei ferner das Root-Zertifikat zum Validieren des Lesezertifikats (246) in der Sub-Security-Domain (114, 116) des Sicherheitselements (112) des mobilen Endgeräts (100) gespeichert ist,

wobei die Authentifizierungsbestätigungen vorzugsweise mit einem der Applikation (108, 109) zugeordneten privaten kryptographischen Schlüssel signiert werden, welcher in der der Applikation (108, 109) zugeordneten Sub-Security-Domain (114, 116) des Sicherheitselements (112) des mobilen Endgeräts (100) gespeichert ist, oder wobei die Applikation das Root-Zertifikat zum Validieren des Lesezertifikats (246) umfasst, wobei die gesamte Applikation oder ein das Root-Zertifikat umfassender Teil der Applikation eine Signatur aufweisen und wobei eine Voraussetzung zum Ausführen der Authentifizierung eine erfolgreiche Integritätsprüfung ist, welche eine Prüfung der Signatur umfasst, wobei die Authentifizierungsbestätigungen von der Applikation vorzugsweise unsigniert an die oder mehrere auf dem mobilen Endgerät (100) installierten Applikationen gesendet werden, welche jeweils ein oder mehrere der identifizierten elektronischen Identitäten (113) verwalten.

8. Verfahren nach einem der vorangehenden Ansprüche, wobei das Lesezertifikat (246) einen ersten öffentlichen kryptographischen Schlüssel eines ersten asymmetrischen Schlüsselpaars des auslesenden Computersystems (200) umfasst, wobei das Authentifizieren ferner umfasst:

   • Extrahieren des ersten öffentlichen kryptographischen Schlüssels des auslesenden Computersystems (200) aus dem Lesezertifikat (246),
   • Erzeugen einer zufälligen Challenge,
   • Senden der zufälligen Challenge an das auslesende Computersystem (200),
   • Empfangen einer Response von dem auslesenden Computersystem (200), wobei die Response eine unter Verwendung eines ersten privaten kryptographischen Schlüssels des ersten asymmetrischen Schlüsselpaars des auslesenden Computersystems (200) erstellte Signatur der Challenge umfasst,
   • Validieren der Signatur der Challenge unter Verwendung der Challenge und des extrahierten ersten öffentlichen kryptographischen Schlüssels.

9. Verfahren nach Anspruch 8, wobei den empfangenden Applikationen (108, 109) jeweils ein oder mehrere Applets (115, 117) zugeordnet sind, welche jeweils in einer der Applikation (108, 109) zugeordneten Sub-Security-Domain (114, 116) eines Sicherheitselements (112) des mobilen Endgeräts (100) installiert sind, wobei sich ein oder mehrere der empfangenden Applikationen (108, 109) jeweils gegenüber dem auslesenden Computersystem (200) authentisieren, wobei das Authentisieren umfasst:

   • Senden eines öffentlichen kryptographischen Schlüssels eines der Applikation (108, 109) zugeordneten asymmetrischen Schlüsselpaars an das auslesende Computersystem (200), wobei ein privater kryptographischen Schlüssel des asymmetrischen Schlüsselpaars in der der Applikation (108, 109) zugeordneten Sub-Security-Domain (114, 116) gespeichert ist,
   • Berechnen eines mit dem auslesenden Computersystem (200) geteilten Geheimnisses durch das der Applikation (108, 109) zugeordnete Applet (115, 117) unter Verwendung des privaten kryptographischen Schlüssels der Applikation (108, 109) und einem von dem auslesenden Computersystem (200) empfangenen ephemeren zweiten öffentlichen kryptographischen Schlüssel des auslesenden Computersystems (200),
   • Erzeugen einer Zufallszahl durch das Applet (115, 117),
   • Erzeugen eines gemeinsamen Authentisierungsschlüssels zum Authentisieren von Informationen im Zuge der Kommunikation zwischen der das Applet (115, 117) verwendeten Applikation (108, 109) und dem auslesenden Computersystem (200) unter Verwendung des geteilten Geheimnisses und der erzeugten Zufallszahl,
   • Erzeugen eines Authentisierungstoken durch das Applet (115, 117) unter Verwendung des Authentisierungsschlüssels und des ephemeren zweiten öffentlichen kryptographischen Schlüssels des auslesenden Computersystems (200) zum Authentisieren der das Applet (115, 117) verwendenden Applikation (108, 109) gegenüber dem auslesenden Computersystem (200),
   • Senden der Zufallszahl zusammen mit dem Authentisierungstoken zum Authentifizieren durch das auslesende Computersystem (200).

10. Verfahren nach Anspruch 9, wobei die Authentifizierungsbestätigungen jeweils den ephemeren zweiten öffentlichen kryptographischen Schlüssel des auslesenden Computersystems (200) umfassen, und/oder

   wobei die das Applet (115, 117) verwendende Applikation (108, 109) in Antwort auf das Senden des der Applikation (108, 109) zugeordneten öffentlichen kryptographischen Schlüssels von dem auslesenden Computersystem (200) eine zweite Kopie des ephemeren zweiten öffentlichen kryptographischen Schlüssel des auslesenden Computersystems (200) empfängt, welche die Applikation (108, 109) mit der ersten Kopie des ephemeren zweiten öffentlichen kryptographischen Schlüssel des auslesenden Computersystems (200) aus der Authentifizierungsbestätigungen vergleicht, wobei eine Übereinstimmung beider Kopien eine Voraussetzung für das Berechnen des geteilten Geheimnisses ist, und/oder
   wobei es sich bei dem berechneten Authentisierungsschlüssel um einen identitätsspezifischen Authentisierungsschlüssel handelt,
   wobei zum Berechnen des Authentisierungsschlüssels vorzugsweise ferner ein Identifikator des Typs der von der Applikation (108, 109) verwalteten elektronischen Identität (113) verwendet wird und der Identifikator zusammen mit dem öffentlichen kryptographischen Schlüssel an das auslesende Computersystem (200) gesendet wird, und/oder
   wobei es sich bei dem Authentisierungsschlüssel um einen Schlüssel zum Erzeugen eines Message Authentication Codes handelt, wobei es sich bei dem Authentisierungstoken um einen unter Verwendung des Authentisierungsschlüssels erzeugten MAC-Code der Zufallszahl handelt.

11. Verfahren nach einem der Ansprüche 9 bis 10, wobei das Applet (115, 117) ferner einen symmetrischen kryptographischen Schlüssel unter Verwendung des geteilten Geheimnisses und der Zufallszahl zum Verschlüsseln der Kommunikation zwischen der das Applet (115, 117) verwendenden Applikation (108, 109) und dem auslesenden Computersystem (200) erzeugt.

12. Verfahren nach Anspruch 11, wobei es sich bei dem berechneten symmetrischen kryptographischen Schlüssel um einen identitätsspezifischen symmetrischen kryptographischen Schlüssel handelt.

13. Verfahren nach Anspruch 12, wobei zum Berechnen des symmetrischen kryptographischen Schlüssels ferner ein Identifikator des Typs der von der Applikation (108, 109) verwalteten elektronischen Identität (113) verwendet wird.

14. Verfahren nach einem der vorangehenden Ansprüche, wobei es sich bei dem auslesenden Computersystem (200) um einen Server handelt, welcher über ein Netzwerk (150) mit dem mobilen Endgerät (100) kommuniziert, oder
wobei es sich bei dem auslesenden Computersystem um ein lokales Computersystem handelt, welches mit dem mobilen Endgerät (100) über eine kontaktlose Funkverbindung zwischen einer Kommunikationsschnittstelle des lokalen Computersystems und Kommunikationsschnittstelle des mobilen Endgeräts (100) kommuniziert.

15. Mobiles Endgerät (100) umfassend einen Prozessor (102), einen Speicher (104) und eine Kommunikationsschnittstelle (122), wobei auf dem mobilen Endgerät (100) eine Mehrzahl elektronischer Identitäten (113) gespeichert ist, wobei der Prozessor (102) dazu konfiguriert ist ein Verfahren zum Freigeben von ein oder mehreren Identitätsattributen ein oder mehrerer der auf dem mobilen Endgerät (100) gespeicherten elektronischen Identitäten (113) für ein auslesendes Computersystem (200) auszuführen, wobei das Freigeben der Identitätsattribute ein erfolgreiches Authentifizieren des auslesenden Computersystems (200) voraussetzt, wobei das Authentifizieren des auslesenden Computersystems (200) umfasst:

• Empfangen einer Leseanfrage des auslesenden Computersystems (200) zum Auslesen ein oder mehrere Identitätsattribute ein oder mehrerer auszulesender Typen von elektronischen Identitäten zusammen mit einem Lesezertifikat (246) des auslesenden Computersystems (200), wobei das Lesezertifikat (246) Leserechte des auslesenden Computersystems (200) auf Identitätsattribute einer Mehrzahl verschiedener Typen elektronischer Identitäten definiert,
• Zentrales Ausführen des Authentifizierens des auslesenden Computersystems (200), wobei das Authentifizieren ein Validieren einer Signatur des Lesezertifikats (246) unter Verwendung eines auf dem mobilen Endgerät (100) hinterlegten Root-Zertifikats umfasst,
• auf ein erfolgreiches Authentifizieren des auslesenden Computersystems (200) hin, Bestimmen einer Gruppe von ein oder mehreren elektronischen Identitäten (113) mit denjenigen auf dem mobilen Endgerät (100) gespeicherten elektronischen Identitäten (113), die zu einem der Typen von elektronischen Identitäten gehören, für welche das Lesezertifikat (246) Leserechte definiert,
• Identifizieren von ein oder mehreren elektronischen Identitäten (113) innerhalb der bestimmten Gruppe von elektronischen Identitäten (113), die zu einem der auszulesenden Typen von elektronischen Identitäten gemäß Leseanfrage gehören,
• Senden von Authentifizierungsbestätigungen an ein oder mehreren identifizierten elektronischen Identitäten (113) verwaltenden Applikationen (108, 109), wodurch Leserechte des auslesenden Computersystems (200) auf die entsprechenden elektronischen Identitäten (113) bestätigt werden.

## Claims

1. A method for releasing one or more identity attributes of one or more electronic identities (113) stored on a mobile terminal (100) for a reading computer system (200), wherein a plurality of electronic identities (113) is stored on the mobile terminal (100), wherein the release of the identity attributes requires successful authentication of the reading computer system (200), wherein the authentication of the reading computer system (200) comprises:

• receiving a read request from the reading computer system (200) for reading one or more identity attributes of one or more types of electronic identities to be read, together with a read certificate (246) of the reading computer system (200), wherein the read certificate (246) defines read rights of the reading computer system (200) to identity attributes of a plurality of different types of electronic identities,
• centrally performing authentication of the reading computer system (200), wherein the authentication comprises validating a signature of the read certificate (246) using a root certificate stored on the mobile terminal (100),

• upon successful authentication of the reading computer system (200), determining a group of one or more electronic identities (113) with those electronic identities (113) stored on the mobile terminal (100) that belong to one of the types of electronic identities for which the read certificate (246) defines read rights,

• identifying one or more electronic identities (113) within the particular group of electronic identities (113) belonging to one of the types of electronic identities to be read out according to the read request,

• sending authentication confirmations to one or more applications (108, 109) installed on the mobile terminal (100), each of which manages one or more of the identified electronic identities (113), thereby confirming read rights of the reading computer system (200) to the corresponding electronic identities (113).

2. The method according to claim 1, wherein the authentication confirmations each comprise an indication of those identity attributes of the identified electronic identities (113) which are managed by the application (108, 109) to which the corresponding authentication confirmation is sent, and for which the read certificate (246) defines read rights of the reading computer system (200).

3. The method according to any one of the preceding claims, wherein the central authentication of the reading computer system (200) is carried out with the validation of the read certificate (246) by an operating system (106) installed on the mobile terminal (100).

4. The method according to claim 3, wherein the authentication is performed by the operating system (106) using a security element (110) of the operating system (106) in which the root certificate for validating the read certificate (246) is stored.

5. The method according to claim 4, wherein the authentication confirmations are signed with a private cryptographic key associated with the operating system (106) and stored in the security element (110) of the operating system (106).

6. The method according to any one of claims 1 to 2, wherein the central authentication of the reading computer system (200) with the validation of the read certificate (246) is performed by an application (108, 109) installed on the mobile terminal (100).

7. The method according to claim 6, wherein applets (115, 117) are associated with the application (108, 109) and are installed in a sub-security domain (114, 116) of a security element (112) of the mobile terminal (100) associated with the application (108, 109), wherein the authentication is performed using the applet (115, 117), wherein further the root certificate for validating the read certificate (246) is stored in the sub-security domain (114, 116) of the security element (112) of the mobile terminal (100),

wherein the authentication confirmations are preferably signed with a private cryptographic key assigned to the application (108, 109), which key is stored in the sub-security domain (114, 116) of the security element (112) of the mobile terminal (100) assigned to the application (108, 109), or

wherein the application comprises the root certificate for validating the read certificate (246), wherein the entire application or a part of the application comprising the root certificate has a signature, and wherein a prerequisite for performing the authentication is a successful integrity check comprising a check of the signature, wherein the authentication confirmations are sent preferably unsigned by the application to the one or more applications installed on the mobile terminal (100), each of which manages one or more of the identified electronic identities (113).

8. The method according to any one of the preceding claims, wherein the read certificate (246) comprises a first public cryptographic key of a first asymmetric key pair of the reading computer system (200), wherein the authentication further comprises:

• extracting the first public cryptographic key of the reading computer system (200) from the read certificate (246),
• creating a random challenge,
• sending the random challenge to the reading computer system (200),
• receiving a response from the reading computer system (200), wherein the response comprises a signature of the challenge created using a first private cryptographic key of the first asymmetric key pair of the reading computer system (200),
• validating the signature of the challenge using the challenge and the extracted first public cryptographic key.

9. The method according to claim 8, wherein the receiving applications (108, 109) are each assigned one or more applets (115, 117), which are each installed in a sub-security domain (114, 116) of a security element (112) of the mobile terminal (100) assigned to the application (108, 109), wherein one or more of the receiving applications (108, 109) each authenticate themselves to the reading computer system (200), wherein the authentication comprises:

> • sending a public cryptographic key of an asymmetric key pair associated with the application (108, 109) to the reading computer system (200), wherein a private cryptographic key of the asymmetric key pair is stored in the sub-security domain (114, 116) associated with the application (108, 109),
> • calculating a secret shared with the reading computer system (200) by the applet (115, 117) associated with the application (108, 109) using the private cryptographic key of the application (108, 109) and an ephemeral second public cryptographic key of the reading computer system (200) received from the reading computer system (200),
> • generating a random number by the applet (115, 117),
> • generating a shared authentication key for authenticating information in the course of communication between the application (108, 109) using the applet (115, 117) and the reading computer system (200) using the shared secret and the generated random number,
> • generating an authentication token by the applet (115, 117) using the authentication key and the ephemeral second public cryptographic key of the reading computer system (200) to authenticate the application (108, 109) using the applet (115, 117) to the reading computer system (200),
> • sending the random number together with the authentication token for authentication by the reading computer system (200).

10. The method according to claim 9, wherein the authentication confirmations each comprise the ephemeral second public cryptographic key of the reading computer system (200), and/or

> wherein the application (108, 109) using the applet (115, 117), in response to the sending of the public cryptographic key associated with the application (108, 109), receives from the reading computer system (200) a second copy of the ephemeral second public cryptographic key of the reading computer system (200), which the application (108, 109) compares with the first copy of the ephemeral second public cryptographic key of the reading computer system (200) from the authentication confirmation, wherein a match of both copies is a prerequisite for calculating the shared secret, and/or
> wherein the calculated authentication key is an identity-specific authentication key,

wherein an identifier of the type of electronic identity (113) managed by the application (108, 109) is preferably further used to calculate the authentication key and the identifier is sent together with the public cryptographic key to the reading computer system (200), and/or
wherein the authentication key is a key for generating a message authentication code, wherein the authentication token is a MAC code of the random number generated using the authentication key.

11. The method according to any one of claims 9 to 10, wherein the applet (115, 117) further generates a symmetric cryptographic key using the shared secret and the random number for encrypting the communication between the application (108, 109) using the applet (115, 117) and the reading computer system (200).

12. The method according to claim 11, wherein the calculated symmetric cryptographic key is an identity-specific symmetric cryptographic key.

13. The method according to claim 12, wherein an identifier of the type of electronic identity (113) administered by the application (108, 109) is further used to calculate the symmetric cryptographic key.

14. The method according to any one of the preceding claims, wherein the reading computer system (200) is a server which communicates with the mobile terminal (100) via a network (150), or
wherein the reading computer system is a local computer system which communicates with the mobile terminal (100) via a contactless radio link between a communication interface of the local computer system and communication interface of the mobile terminal (100).

15. A mobile terminal (100) comprising a processor (102), a memory (104) and a communication interface (122), wherein a plurality of electronic identities (113) is stored on the mobile terminal (100), wherein the processor (102) is configured to perform a method for releasing one or more identity attributes of one or more of the electronic identities (113) stored on the mobile terminal (100) for a reading computer system (200), wherein the releasing of the identity attributes requires successful authentication of the reading computer system (200), wherein the authentication of the reading computer system (200) comprises:

> • receiving a read request from the reading computer system (200) for reading one or more identity attributes of one or more types of electronic identities to be read, together with a read certificate (246) of the reading computer system (200), wherein the read certificate (246) defines read rights of the reading computer system (200) to identity attributes of a plurality of different types of electronic identities,

• centrally performing the authentication of the reading computer system (200), wherein the authentication comprises validating a signature of the read certificate (246) using a root certificate stored on the mobile terminal (100),

• upon successful authentication of the reading computer system (200), determining a group of one or more electronic identities (113) with those electronic identities (113) stored on the mobile terminal (100) that belong to one of the types of electronic identities for which the read certificate (246) defines read rights,

• identifying one or more electronic identities (113) within the determined group of electronic identities (113) that belong to one of the types of electronic identities to be read out according to the read request,

• sending authentication confirmations to applications (108, 109) managing one or more identified electronic identities (113), whereby read rights of the reading computer system (200) to the corresponding electronic identities (113) are confirmed.

**Revendications**

1. Procédé de délivrance d'un ou de plusieurs attributs d'identité d'une ou de plusieurs identités (113) électroniques enregistrées sur un terminal (100) mobile pour un système informatique (200) de lecture, dans lequel une multiplicité d'identités (113) électroniques est enregistrée sur le terminal (100) mobile, dans lequel la délivrance des attributs d'identité est conditionnée à une authentification réussie du système informatique ('200) de lecture, dans lequel l'authentification du système informatique (200) de lecture comprend :

• la réception d'une demande de lecture du système informatique (200) de lecture pour la lecture d'un ou de plusieurs attributs d'identités d'un ou de plusieurs types d'identités électroniques conjointement avec un certificat de lecture (246) du système informatique (200) de lecture, dans lequel le certificat de lecture (246) définit des droits de lecture du système informatique (200) de lecture pour des attributs d'identités d'une multiplicité d'identités électroniques de types divers,

• l'exécution de manière centralisée de l'authentification du système informatique (200) de lecture, dans lequel l'authentification comprend une validation d'une signature du certificat de lecture (246) moyennant l'emploi d'un certificat racine consigné sur le terminal (100) mobile,

• suite à une authentification réussie du système informatique (200) de lecture, la détermination d'un groupe d'une ou de plusieurs identités (113) électroniques avec les identités (113) électroniques en question enregistrées sur le terminal (100) mobile qui font partie des types d'identités électroniques pour lesquelles le certificat de lecture (246) définit des droits de lecture,

• l'identification d'une ou de plusieurs identités (113) électroniques à l'intérieur du groupe d'identités (113) électroniques déterminé qui font partie d'un des types d'identités électroniques à lire conformément à la demande de lecture,

• l'envoi de confirmations d'authentification à une ou à plusieurs applications (108, 109) installées sur le terminal (100) mobile, lesquelles gèrent respectivement une ou plusieurs des identités (113) électroniques identifiées, ce par quoi des droits de lecture du système informatique (200) de lecture sont confirmés pour les identités (113) électroniques correspondantes.

2. Procédé selon la revendication 1, dans lequel les confirmations d'authentification comprennent respectivement une indication des attributs d'identité en question des identités (113) électroniques identifiées, lesquelles sont gérées par l'application (108, 109), auxquelles la confirmation d'authentification correspondante est envoyée et pour lesquelles le certificat de lecture (246) définit des droits de lecture du système informatique (200) de lecture.

3. Procédé selon l'une des revendications précédentes, dans lequel l'authentification de manière centralisée du système informatique (200) de lecture est exécutée avec la validation du certificat de lecture (246) par un système d'exploitation (106) installé sur le terminal (100) mobile.

4. Procédé selon la revendication 3, dans lequel l'authentification par le système d'exploitation (106) a lieu moyennant l'emploi d'un élément de sécurité (110) du système d'exploitation (106) dans lequel le certificat racine est enregistré pour la validation du certificat de lecture (246).

5. Procédé selon la revendication 4, dans lequel les confirmations d'authentifications sont signées avec une clé cryptographique privée associée au système d'exploitation (106) laquelle est enregistrée dans l'élément de sécurité (110) du système d'exploitation (106).

6. Procédé selon l'une des revendications 1 à 2, dans lequel l'authentification de manière centralisée du système informatique (200) de lecture a lieu avec la validation du certificat de lecture (246) par une application (108, 109) installée sur le terminal (100) mobile.

7. Procédé selon la revendication 6, dans lequel des applets (115, 117) sont associés à l'application (108,109), lesquels sont installés dans des sous-domaines de sécurité (114, 116) d'un élément de sécurité (112) du terminal (100) mobile, associés dans une des applications (108, 109), dans lequel l'authentification a lieu moyennant l'emploi de l'applet (115, 117), dans lequel, en outre, le certificat racine est enregistré pour la validation du certificat de lecture (246) dans le sous-domaine de sécurité (114, 116) de l'élément de sécurité (112) du terminal (100) mobile,

dans lequel les confirmations d'authentifications sont signées de préférence avec une clé cryptographique privée associée à l'application (108, 109), laquelle est enregistrée dans le sous-domaine de sécurité (114, 116) associé à l'application (108, 109) de l'élément de sécurité (112) du terminal (100) mobile, ou

dans lequel l'application comprend le certificat racine pour la validation du certificat de lecture (246), dans lequel l'application entière ou une partie de l'application comprenant le certificat racine présentent une signature et dans lequel une condition préalable pour l'exécution de l'authentification est une vérification d'intégrité réussie, laquelle comprend une vérification de la signature,

dans lequel les confirmations d'authentifications sont envoyées par l'application de préférence non signées à l'application ou aux applications installées sur le terminal (100) mobile, lesquelles gèrent respectivement une ou plusieurs des identités (113) électroniques identifiées.

8. Procédé selon l'une des revendications précédentes, dans lequel le certificat de lecture (246) comprend une première clé cryptographique publique d'une première paire de clés asymétrique du système informatique (200) de lecture, dans lequel l'authentification comprend en outre :

• l'extraction de la première clé cryptographique publique du système informatique (200) de lecture à partir du certificat de lecture (246),
• la création d'un défi aléatoire,
• l'envoi du défi aléatoire au système informatique (200) de lecture,
• la réception d'une réponse du système informatique (200) de lecture, dans lequel la réponse comprend une signature du défi établie moyennant l'emploi d'une première clé cryptographique privée de la première paire de clés symétrique du système informatique (200) de lecture,
• la validation de la signature du défi moyennant l'emploi du défi et de la première clé cryptographique publique extraite.

9. Procédé selon la revendication 8, dans lequel les applications (108, 109) réceptionnées sont respectivement associées à un ou plusieurs applets (115, 117), lesquels sont respectivement installés dans un sous-domaine de sécurité (114, 116) de l'élément de sécurité (112) du terminal (100) mobile associé à une des applications (108, 109), dans lequel une ou plusieurs des applications (108, 109) réceptionnées s'authentifient respectivement vis-à-vis du système informatique (200) de lecture, dans lequel l'authentification comprend :

• l'envoi d'une clé cryptographique publique d'une paire de clés asymétrique associée à une des applications (108, 109) au système informatique (200) de lecture, dans lequel une clé cryptographique privée de la paire de clés asymétrique est enregistrée dans le sous-domaine de sécurité (114, 116) associé à l'application (108, 109),
• le calcul d'un secret partagé avec le système informatique (200) de lecture par l'applet (115, 117) associé à l'application (108, 109) moyennant l'emploi de la clé cryptographique privée de l'application (108, 109) et d'une deuxième clé cryptographique publique éphémère du système informatique (200) de lecture réceptionnées par le système informatique (200) de lecture,
• la création d'un nombre aléatoire par l'applet (115, 117),
• la création d'une clé d'authentification commune pour l'authentification d'informations dans le cadre de la communication entre l'application (108, 109) employant l'applet (115, 117) et le système informatique (200) de lecture moyennant l'emploi du secret partagé et du nombre aléatoire créé,
• la création d'un jeton d'authentification par l'applet (115, 117) moyennant l'emploi de la clé d'authentification et de la deuxième clé cryptographique publique éphémère du système informatique (200) de lecture pour l'authentification de l'application (108, 109) employant l'applet (115, 117) vis-à-vis du système informatique (200) de lecture,
• l'envoi du nombre aléatoire conjointement avec le jeton d'authentification pour l'authentification par le système informatique (200) de lecture.

10. Procédé selon la revendication 9, dans lequel les confirmations d'authentifications comprennent respectivement la deuxième clé cryptographique publique éphémère du système informatique (200) de lecture, et/ou

dans lequel l'application (108, 109) employant l'applet (115, 117), en réponse à l'envoi de la clé cryptographique publique associée à l'application (108, 109), reçoit une deuxième copie de la deuxième clé cryptographique publique éphémère du système informatique (200) de lecture par le système informatique (200) de lecture, laquelle compare l'application (108, 109) avec la première copie de la deuxième clé cryptographique publique éphémère du système informatique (200) de lecture provenant de la confirmation d'authentification, dans lequel une concordance des deux copies est une condition préalable pour le calcul du secret partagé, et/ou dans lequel, dans le cas de la clé d'authentification calculée, il s'agit d'une clé d'authentification spécifique à l'identité,
dans lequel, pour le calcul de la clé d'authentification, on emploie en outre de préférence un identificateur du type de l'identité (113) électronique gérée par l'application (108, 109) et l'identificateur est envoyé conjointement avec la clé cryptographique publique au système informatique (200) de lecture, et/ou
dans lequel, dans le cas de la clé d'authentification, il s'agit d'une clé pour la création d'un code d'authentification de message, dans lequel, dans le cas du jeton d'authentification, il s'agit du code MAC du nombre aléatoire créé moyennant l'emploi de la clé d'authentification.

11. Procédé selon l'une des revendications 9 à 10, dans lequel l'applet (115, 117) crée en outre une clé cryptographique symétrique moyennant l'emploi du secret partagé et du nombre aléatoire pour le chiffrement de la communication entre l'application (108, 109) employant l'applet (115, 117) et le système informatique (200) de lecture.

12. Procédé selon la revendication 11, dans lequel, dans le cas de la clé cryptographique symétrique calculée, il s'agit d'une clé cryptographique symétrique spécifique à une identité.

13. Procédé selon la revendication 12, dans lequel, pour le calcul de la clé cryptographique symétrique, on emploie en outre un identificateur du type de l'identité (113) électronique gérée par l'application (108, 109).

14. Procédé selon l'une des revendications précédentes, dans lequel, dans le cas du système informatique (200) de lecture, il s'agit d'un serveur, lequel communique avec le terminal (100) mobile par le biais d'un réseau (150), ou
dans lequel, dans le cas du système informatique de lecture, il s'agit d'un système informatique local, lequel communique avec le terminal (100) mobile par le biais d'une liaison radio sans contact entre une interface de communication du système informatique local et l'interface de communication du terminal (100) mobile.

15. Terminal (100) mobile comprenant un processeur (102), une mémoire (104) et une interface de communication (122), dans< lequel, une multiplicité d'identités (113) électroniques est enregistrée sur le terminal (100) mobile, dans lequel le processeur (102) est conçu pour exécuter un procédé de délivrance d'un ou de plusieurs attributs d'identité d'une ou de plusieurs identités (113) électroniques enregistrées sur le terminal (100) mobile pour un système informatique (200) de lecture, dans lequel la délivrance des attributs d'identité est conditionnée à une authentification réussie du système informatique ('200) de lecture, dans lequel l'authentification du système informatique (200) de lecture comprend :

• la réception d'une demande de lecture du système informatique (200) de lecture pour la lecture d'un ou de plusieurs attributs d'identités d'un ou de plusieurs types d'identités électroniques conjointement avec un certificat de lecture (246) du système informatique (200) de lecture, dans lequel le certificat de lecture (246) définit des droits de lecture du système informatique (200) de lecture pour des attributs d'identités d'une multiplicité d'identités électroniques de types d'identités électroniques divers,
• l'exécution de manière centralisée de l'authentification du système informatique (200) de lecture, dans lequel l'authentification comprend une validation d'une signature du certificat de lecture (246) moyennant l'emploi d'un certificat racine consigné sur le terminal (100) mobile,
• suite à une authentification réussie du système informatique (200) de lecture, la détermination d'un groupe d'une ou de plusieurs identités (113) électroniques avec les identités (113) électroniques en question enregistrées sur le terminal (100) mobile qui font partie des types d'identités électroniques pour lesquelles le certificat de lecture (246) définit des droits de lecture,
• l'identification d'une ou de plusieurs identités (113) électroniques à l'intérieur du groupe d'identités (113) électriques déterminé qui font partie d'un des types d'identités électroniques à lire conformément à la demande de lecture,
• l'envoi de confirmations d'authentification à une ou à plusieurs des applications (108, 109) gérant les identités (113) électroniques identifiées, ce par quoi des droits de lecture du système informatique (200) de lecture sont confirmés pour les identités (113) électroniques correspondantes.

```
                                               ┌─ 100
┌─────────────────────────────────────┐
│ Mobiles Endgerät                    │
│                                     │──── 102
│ ┌─────────────────────────────────┐ │
│ │ Prozessor                       │ │
│ └─────────────────────────────────┘ │──── 104
│ ┌─────────────────────────────────┐ │
│ │ Speicher                        │ │──── 106
│ │ ┌─────────────────────────────┐ │ │
│ │ │ BS                          │ │ │──── 108
│ │ └─────────────────────────────┘ │ │
│ │ ┌─────────────────────────────┐ │ │
│ │ │ Applikation 1               │ │ │
│ │ └─────────────────────────────┘ │ │
│ │              ⋮                  │ │──── 109
│ │ ┌─────────────────────────────┐ │ │
│ │ │ Applikation N               │ │ │
│ │ └─────────────────────────────┘ │ │
│ └─────────────────────────────────┘ │──── 110
│ ┌─────────────────────────────────┐ │
│ │ 1. Sicherheitselement           │ │
│ └─────────────────────────────────┘ │──── 112
│ ┌─────────────────────────────────┐ │──── 114
│ │ 2. Sicherheitselement           │ │
│ │ ┌─────────────────────────────┐ │ │──── 115
│ │ │ Sub-Security-Domain 1       │ │ │
│ │ │ ┌─────────────────────────┐ │ │ │
│ │ │ │ Sicherheitsapplet 1     │ │ │ │
│ │ │ └─────────────────────────┘ │ │ │
│ │ └─────────────────────────────┘ │ │
│ │              ⋮                  │ │──── 116
│ │ ┌─────────────────────────────┐ │ │
│ │ │ Sub-Security-Domain 1       │ │ │──── 117
│ │ │ ┌─────────────────────────┐ │ │ │
│ │ │ │ Sicherheitsapplet 1     │ │ │ │
│ │ │ └─────────────────────────┘ │ │ │
│ │ └─────────────────────────────┘ │ │
│ └─────────────────────────────────┘ │──── 118
│ ┌─────────────────────────────────┐ │
│ │ Nutzerschnittstelle             │ │
│ └─────────────────────────────────┘ │──── 120
│ ┌─────────────────────────────────┐ │
│ │ Sensor                          │ │
│ └─────────────────────────────────┘ │──── 122
│ ┌─────────────────────────────────┐ │
│ │ Kommunikationsschnittstelle     │ │
│ └─────────────────────────────────┘ │
└─────────────────────────────────────┘
```

Fig. 1

| Empfangen Zugriffsanfrage | 300 |
|---|---|

| Zentrales Authentifizieren des auslesenden Computersystems | 302 |
|---|---|

| Bestimmen gespeicherte Identitäten mit Zugriffsrechten | 304 |
|---|---|

| Identifizieren auszulesende Identitäten | 306 |
|---|---|

| Senden Authentifizierungsbestätigung an Applikationen | 308 |
|---|---|

| Authentisieren Applikationen | 310 |
|---|---|

| Senden angefragte Identitätsattribute | 312 |
|---|---|

Fig. 2

111
Authentifizierendes
Element

108, 109
Applikationen

200
Auslesendes
Computersystem

400: Zugriffsanfrage

402: Extrahieren
öfftl. Schlüssel

404: Erzeugen
Challenge

406: Challenge

408: Erzeugen
Response

410: Response

412: Validieren
Response

414: Erzeugen
Authentifizierungsbestätigung

416: Authentifizierungsbestätigung

Fig. 3

Fig. 4

```
                                            ┌─ 100
  ┌──────────────────────────────────────────┐
  │ Mobiles Endgerät                         │      ┌─ 108
  │ ┌────────────────────────────────────┐   │─┐  ┌─ 105
  │ │ ID-Anwendungsprogramm              │   │ │  │
  │ │ ┌────────────────────────────────┐ │   │ │──┤
  │ │ │ ID-Client                      │ │   │ │  │
  │ │ └────────────────────────────────┘ │   │ │  │     ┌─ 107
  │ │ ┌────────────────────────────────┐ │   │ │──┘
  │ │ │ ID-Verwaltungsmodul    ┌─113   │ │   │
  │ │ │ ┌──────┐ ┌──────┐    ┌──────┐  │ │   │
  │ │ │ │Profil│ │Profil│ ···│Profil│  │ │   │
  │ │ │ │  P1  │ │  P2  │    │  Pn  │  │ │   │
  │ │ │ └──────┘ └──────┘    └──────┘  │ │   │
  │ │ └────────────────────────────────┘ │   │
  │ └────────────────────────────────────┘   │      ┌─ 106
  │ ┌────────────────────────────────────┐   │─┐  ┌─ 110
  │ │ BS                                 │   │ │  │
  │ │ ┌────────────────────────────────┐ │   │ │──┤
  │ │ │ Sicherheitselement BS          │ │   │ │  │
  │ │ └────────────────────────────────┘ │   │ │  │     ┌─ 112
  │ │ ┌────────────────────────────────┐ │   │ │──┘
  │ │ │ Sicherheitselement     ┌─115   │ │   │
  │ │ │ ┌──────┐ ┌──────┐    ┌──────┐  │ │   │
  │ │ │ │Applet│ │Applet│ ···│Applet│  │ │   │
  │ │ │ │  P1  │ │  P2  │    │  Pn  │  │ │   │
  │ │ │ └──────┘ └──────┘    └──────┘  │ │   │
  │ │ └────────────────────────────────┘ │   │
  │ └────────────────────────────────────┘   │
  └──────────────────────────────────────────┘
```

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102019100335 A1